# EUROPEAN PATENT SPECIFICATION

(11) **EP 3 940 453 B1**
(45) Date of publication and mention of the grant of the patent: **11.10.2023**
(21) Application number: 20186509.4
(22) Date of filing: 17.07.2020
(51) Int. Cl.: G02F 1/1516, G02F 1/153

(54) **VERTICAL ELECTROCHROMIC DISPLAY**
VERTIKALE ELEKTROCHROME ANZEIGE
AFFICHAGE ÉLECTROCHIMIQUE VERTICAL

(43) Date of publication of application: 19.01.2022
(73) Proprietor: RISE Research Institutes of Sweden AB, 501 15 Borås (SE)
(72) Inventor: ANDERSSON ERSMAN, Peter, SE-612 40 Finspång (SE); ÅHLIN, Jessica, SE-617 92 Norsholm (SE)
(74) Representative: AWA Sweden AB

(56) References cited:
- JP-A- S62 163 022
- US-A1- 2014 307 302
- US-A1- 2017 108 754
- KAWAHARA JUN ET AL: "Improving the color switch contrast in PEDOT:PSS-based electrochromic displays", ORGANIC ELECTRONICS, ELSEVIER, AMSTERDAM, NL, vol. 13, no. 3, 27 December 2011 (2011-12-27), pages 469-474, XP028856812, ISSN: 1566-1199, DOI: 10.1016/J.ORGEL.2011.12.007

## Description

### Field of the invention

The present invention relates to a directly addressed or directly addressable display device comprising an electrolyte in ionic contact with, and sandwiched between, an electrochromic layer and a counter electrode, wherein the display is arranged to change colour upon changing the oxidation state of said electrochromic layer. The present invention further relates to the production of such a display device.

### Background Art and Summary of the invention

In *directly addressed* electrochromic displays or directly addressable electrochromic displays, each pixel or switchable segment is connected by a separate electric conduction line to an external drive voltage source, facilitating simultaneous individual electrical control of all pixels in the display. Furthermore, when operating a directly addressed electrochromic display, or directly addressable electrochromic display, it is possible to turn on, or initiating a switch of, all the pixels simultaneously. It should be noted that the expressions *directly addressed* and *directly addressable* are used interchangeably throughout the application, and both refer to a display device that is to be addressed by direct addressing; expressions *pixel* and *switchable segment* are also used interchangeably throughout the application, and the term is defined below. When the number of pixels in a display is large, it is either physically impossible or impractical to connect one separate line to each pixel. To overcome this problem the pixels are commonly arranged in a matrix structure in which they are addressed by time-multiplexing techniques via row and column lines from the matrix edges. Such displays and the methods of addressing them are denoted *matrix displays* and *matrix addressing*, respectively.

The switching of electrochromic electrode materials is a faradic reaction, that is, ions must be able to move into or out from the electrode to compensate for changes in oxidation levels of the electrode material. This also means that at least one ionic species in an electrolyte must be mobile in the electrode material. In electrochromic devices where the electrochromic electrode materials also serves as a conductor, providing a lead for current to a voltage source, the mobile ion can also migrate in the electrode material. This migration may result in a reduced sharpness of the colour switch as the area switched can extend from the area defined by the location of the counter electrode or by the location of the electrolyte.

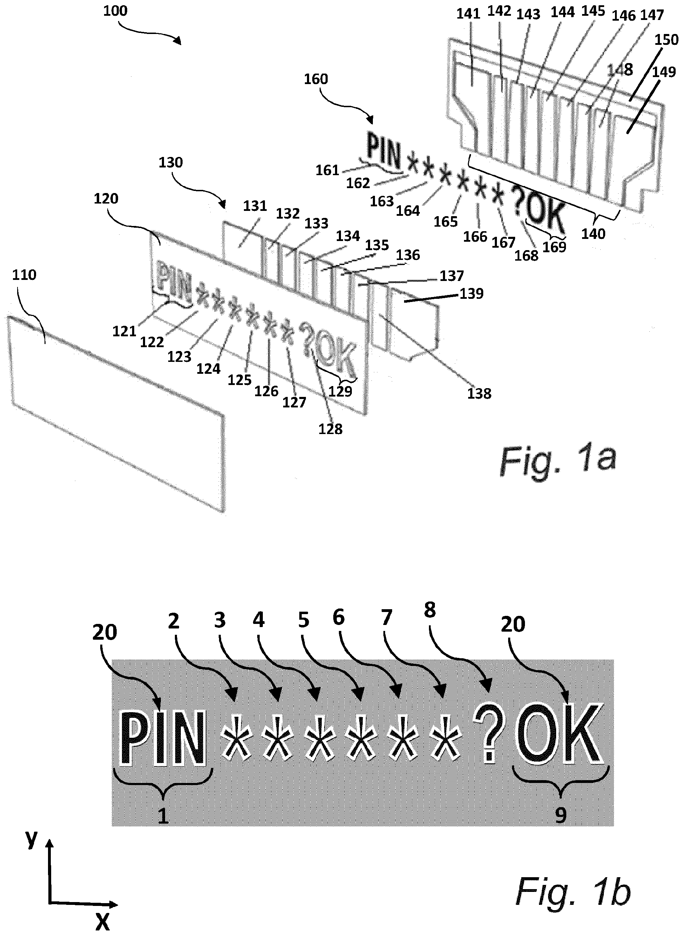

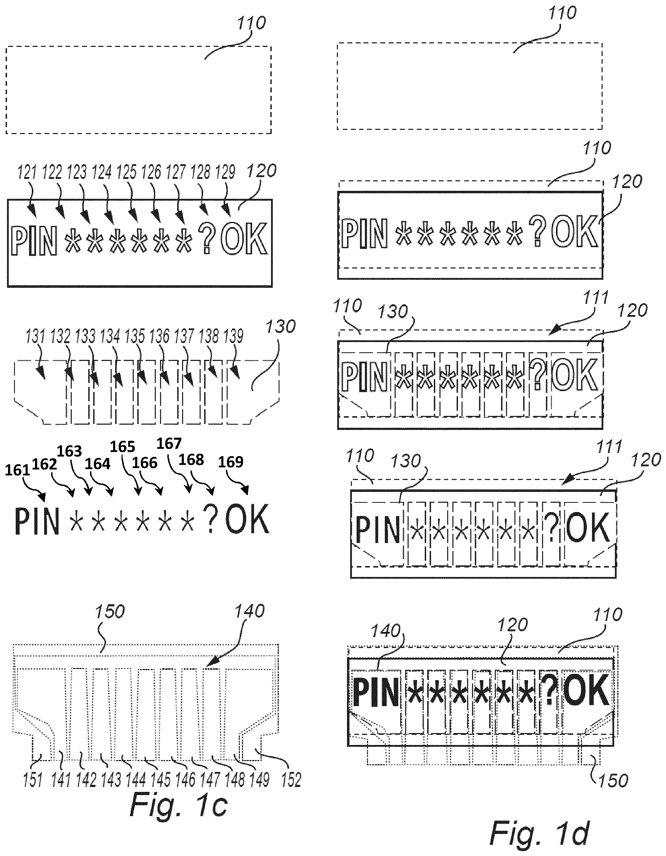

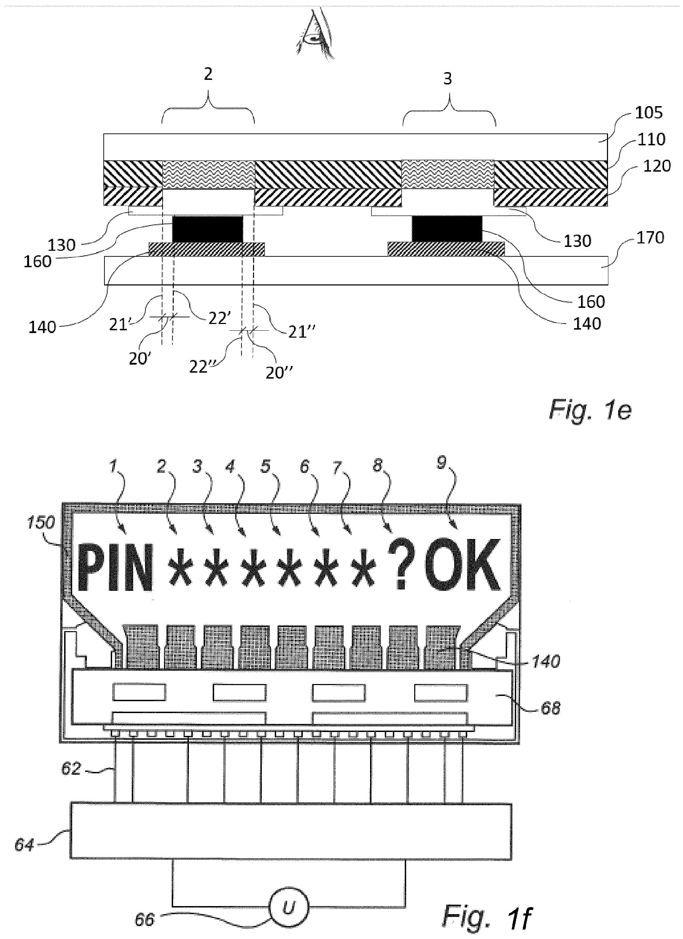

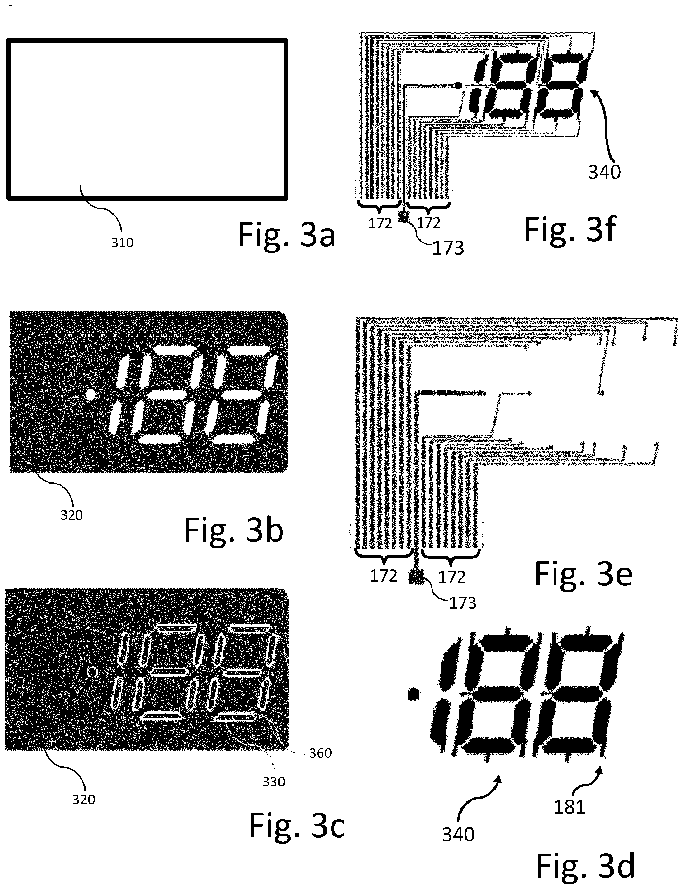

WO 2008/062149 describes lateral electrochromic displays comprising PEDOT:PSS as electrochromic material, which are illustrated in e.g. Figures 1-3. In operation a voltage difference is applied between the two pixel portions which are bridged by electrolyte, as can be seen in Figure 3. This voltage difference gives rise to a colouring of the electrochromic material, the colouring being initiated at a first edge of the electrochromic material at the gap between the two pixel portions. While the voltage is applied, the colouring spreads across the material and a border is formed between material that has switched colour and material that has not yet switched colour. It has been seen that the border between the switched and un-switched material is not always as sharp as may be desired, in order to be able to show e.g. symbols having more complex shapes.

An inherent problem when desiring to create sharp images or symbols by this or vertical type of displays originates from the fact that ions must be mobile in both the electrolyte and in the electrochromic material itself in order to give rise to the colour change. So, initially the colour change will be seen only at the area of the electrochromic material which is covered by electrolyte. However, the ions will migrate both vertically and laterally in the electrochromic material, and thus also outside of the electrolyte covered area. This migration of the ions results in a blurring of the switched area, especially along the edges of the electrolyte, and thus also of the displayed symbol.

WO 2013/068185 describes that by combining a polycationic electrolyte and a printable layer being sufficiently ionically isolative, an all printable display device capable of displaying surprisingly sharp symbols and images can be obtained. The two-part form is based on this document. Also known and relevant to the present invention are JP S62 163022 A and US 2017/108754 A1.

However, there is a need to find a way of making directly addressed display devices, having an increased manufacturing yield; and preferably displaying sharper images and/or having a significantly lower switching voltage, e.g. 1.5 V instead of 3V as described in WO 2013/068185

The scientific article "Improving the color switch contrast in PEDOT:PSS-based electrochromic displays" by Jun Kawahara et al. gives a structured review of ways to improve the color contrast as well as ways to lower the power consumption. https://doi.org/10.1016/j.orgl.2011.12.007.

### Summary of the invention

An object of the present invention is to overcome or alleviate the above mentioned drawbacks. These and other objects are met by the subject matters provided in the independent claims. Preferred embodiments of the invention are presented in the dependent claims.

According to a first aspect thereof, the present invention provides a directly addressable display, comprising at least one switchable segment which is repeatedly switchable between an on-state and an off-state, wherein each of said at least one switchable segment is configured to display at least one predetermined symbol in said on-state, further each switchable segment comprises a stack of layers, said stack of layers comprising:
- a first electrode layer comprising electrochromic and electrochemically active organic polymer material being electrochemically switchable between two different visually detectable coloring states respectively corresponding to said on-state and said off-state of said switchable segment;
- a symbol defining layer which is electronically and ionically insulating and comprises at least one opening, which at least one opening defines the shape of said at least one predetermined symbol, said symbol defining layer being arranged behind said first electrode layer in the viewing direction of said display,
- an electrolyte layer arranged behind said first symbol defining layer in the viewing direction of said display, which electrolyte layer fills and covers the at least one opening of said symbol defining layer,
- a counter electrode which, in the viewing direction of said display, is arranged behind said electrolyte layer, said counter electrode comprises a carbon layer and an EC layer,

wherein said EC layer comprises electrochromic and electrochemically active organic polymer material, and is arranged in ionic contact with said electrolyte layer, and wherein said carbon layer is arranged in physical contact with said EC layer and preferably arranged behind said EC layer in the viewing direction of said display,
wherein for each of said at least one opening in the symbol defining layer, the spatial extension of the EC layer is smaller than the spatial extension of the opening in the symbol defining layer, leaving a rim portion of the opening in the symbol defining layer uncovered by the EC layer, which uncovered rim portion partly or fully surrounds said EC layer and wherein said carbon layer extends behind the electrolyte layer preferably at least from the EC layer across the rim portion to the symbol defining layer.

In relation to this invention *the rim portion of the opening in the symbol defining layer* extends along the edge of the opening in the symbol defining layer.

To facilitate the reading the term *the uncovered rim portion* is introduced, and the term denotes the part of the rim portion of the opening in the symbol defining layer which is not covered by the EC-layer of the counter electrode in the viewing direction of the display.

When the *uncovered rim portion* is *continuous* it encircles or extends around the EC-layer without interruptions. When the *uncovered rim portion* is *discontinuous* there is at least one portion where the EC-layer covers the edge of the opening in the symbol defining layer.

According to one exemplifying embodiment the ratio between *the uncovered rim portion* and *the rim portion of the opening in the symbol defining layer* is between 0.85 and 1 for each rim portion of each opening in each switchable segment. This ratio may also be referred to as *the uncovered ratio.*

According to one exemplifying embodiment, the total length of the uncovered rim portion is between 60 % and 100 %, or at least 70 % or at least 80 % or at least 90 % or at least 95 % of the length of the circumference of the respective opening in the symbol defining layer at which said rim portion is arranged.

According to one exemplifying embodiment, the width of the uncovered rim portion is at least 10 µm or at least 50 µm; additionally or alternatively the width of the rim portion is at most 900 µm or at most 500 µm.

The above described display device is advantageous as it provides a lower switching voltage, and due to this also a sharper image, compared to similar devices where the counter electrode comprises only carbon. The area of the EC-layer, which forms the counter electrode together with the subsequently deposited carbon layer, is restricted by the introduction of an uncovered rim portion. One advantage of introducing said rim portion is that it may prevent smearing of the EC-layer, which potentially could generate electronic short-circuits and thereby also cross-talk between neighbouring display segments.

The switching voltage used in WO 2013/068185 to obtain the colour switch of the electrochromic layer is a relatively high switching voltage, which the inventors have realised implies an elevated risk of lateral ion migration in the electrochromic layer, which in turn could result in blurring of edges of the switched area. Lowering the switching voltage may lower the risk of lateral ion migration, which may result in a sharper image. So, immediate advantages of obtaining a lowered switching voltage, e.g. 1.5 V instead of 3 V, are e.g. lower power consumption, less parasitic electrochemical reactions and the possibility to use only one (printed) battery instead of two (printed) batteries connected in series; parameters that all are very important when integrating the electrochromic display into electronic systems based on printed electronic components.

According to a second aspect thereof, the present invention provides a method of producing a directly addressable display device arranged to selectively display at least one symbol, which symbol is repeatedly switchable between an off-state and an on-state, comprising
- providing a continuous or discontinuous first electrode layer comprising electrochromic and electrochemically active organic polymer material being electrochemically switchable between two different visually detectable coloring states;
- fully or partly cover said first electrode layer by a symbol defining layer, which symbol defining layer is electronically and ionically insulating and comprises at least one opening for each one of said at least one segments, which at least one opening defines the shape of the at least one predetermined symbol of a respective one of said at least one switchable segment, and wherein each of said at least one opening exposes a respective surface portion of said first electrode layer,
- providing an electrolyte layer which comprises at least one electrolyte layer portion, wherein each one of said electrolyte layer portions are spatially separated from each other and each one of said electrolyte layer portions fully covers a respective one of said opening(s) in the symbol defining layer,
- providing an EC layer which comprises at least one EC layer portion, wherein each one of said EC layer portion(s) are spatially separated from each other and each one of said EC layer portions are in direct contact with a respective one of said electrolyte layer portions and partly covers a respective one of said at least one openings while leaving a rim portion of said at least one opening uncovered;
- providing a carbon layer which comprises at least one carbon layer portion, wherein each one of said carbon layer portions are spatially separated from each other, and each one of said carbon layer portions is in electronic contact with a respective one of said EC layer portion, and wherein said carbon layer extends from the EC layer across the rim portion to the symbol defining layer.

The above described production process is advantageous as it produces a display device providing a lower switching voltage, and due to this also a sharper image, compared to similar devices where the counter electrode comprises only carbon. The production process is also advantageous as it provides an inexpensive way for massproducing the display devices without having to invest in e.g. expensive clean room facilities.

The present disclosure also relates to the operation of a directly addressable display device arranged as described in relation to said first aspect of the invention, comprising the step of providing an electric potential difference between said first electrode layer and said counter electrode layer, which electric potential difference causes a colour switch of the first electrode layer of the switchable segment upon reduction of said first electrode layer. The first electrode layer is also referred to as the electrochromic first electrode layer herein.

For years the inventors have struggled to design a directly addressed display device having a lower switching voltage than those obtained so far. Many solutions have been attempted without success.

In summary, the invention is based on a surprising insight by the inventors that by providing an EC-layer having a surface area which is smaller than the opening in the symbol defining layer the smearing of the EC-layer may be reduced, which not only results in a sharper display but also lowers the required switching voltage as well as many times maintains, or even improves, the manufacturing yield .

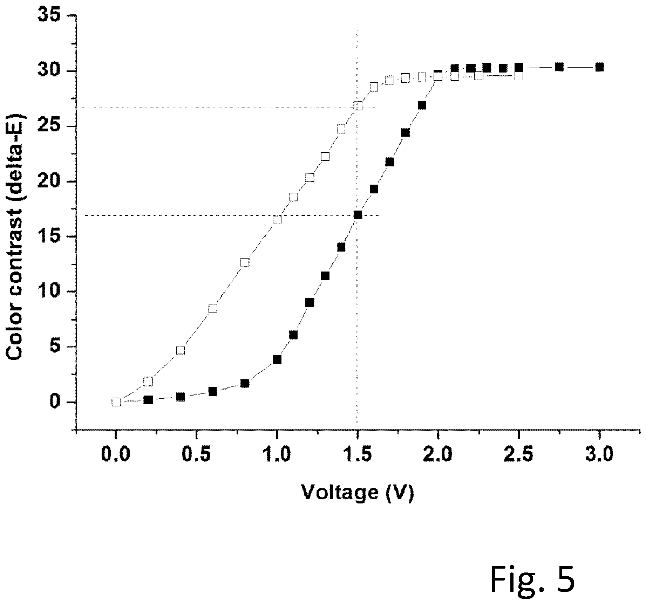

Without being bound to any particular theoretical explanation, the following is believed to be the reasons behind the improved results. It is believed by the inventors that the lowered switching voltage is obtained through the introduction of an EC-layer in direct contact with the electrolyte, such that the first electrode layer and the EC-layer are relying on the same material, see e.g. Figure 5 in the scientific article Improving the color switch contrast in PEDOT:PSS-based electrochromic displays: https://doi.org/10.1016/j.orgel.2011.12.007. However, successful manufacturing of screen printed electrochromic displays had not been achieved due to severe smearing of the EC-layer when printed according to an area corresponding to the area of the opening of the symbol defining layer, or when printed at an area even larger than the opening of the symbol defining layer. The EC-layer smearing inevitably results in electronic short-circuits between neighbouring segments, and thereby also cross-talk between neighbouring display segments. But at the same time, it is of importance to establish an electronic connection between the counter electrode layer and the set of second addressing electrodes (172), preferably outside the area covered by the electrolyte to minimise parasitic electrochemical reactions. Therefore, the invention relies on the provision of an EC-layer at an area smaller than the opening of the symbol defining layer, thereby creating said uncovered rim portion, and the electronic connection with the set of second addressing electrodes may be ensured by the provision of a carbon layer extending across said uncovered rim portion. This ensures a lowered switching voltage, and in addition to this, the lowered switching voltage causes less lateral ion migration in the first electrode layer, thereby resulting in an even more sharp display image. Furthermore, the invention is advantageous from the perspective of system integration; the overall power consumption is lowered by the lower switching voltage and the requirements on the system power supply is relaxed, i.e. one 1.5 V (printed) battery can be used when an EC-layer and a carbon layer is forming the counter electrode, instead of two 1.5 V batteries connected in series when only a carbon layer is used as the counter electrode.

According to one exemplifying embodiment, the carbon layer of each switchable segment is arranged behind the EC layer in the viewing direction of the display. The carbon layer of each switchable segment may e.g. cover between 25 % to 100 % of the surface area of a respective EC-layer or cover at least 40 %, or at least 50 %, or at least 70 %, or at least 80 %, or at least 90 %, or at least 95%, or at least 98 % of the surface area of a respective EC-layer. Additionally or alternatively, the carbon layer of each switchable segment may e.g. cover 100 % or cover at most 100 % of the surface area of a respective EC-layer.

Additionally or alternatively, the carbon layer of each switchable segment may e.g. cover between 25 % to 100 % of the surface area of a respective opening in the symbol defining layer, or cover at least 40 %, or at least 50 %, or at least 70 %, or at least 80 %, or at least 90 %, or at least 95%, or at least 98 % of the surface area of a respective opening in the symbol defining layer. By covering a larger surface area of the opening with the carbon layer, a lower resistance in the counter electrode may be achieved.

Additionally or alternatively, the carbon layer of each switchable segment may e.g. cover 100 % or cover at most 100 % of the surface area of a respective opening in the symbol defining layer.

Additionally or alternatively, the carbon layer of each switchable segment may extend to the side of the opening of the symbol defining layer, i.e. behind the symbol defining layer.

According to one embodiment, each counter electrode layer of each at least one switchable segment is connectable via an addressing electrode and/or by a separate electric conductor to an external power supply, to enable individual control of the potential applied to each counter electrode layer. This is advantageous as it enables a simultaneous switch of all switchable segments in a simple manner. According to one embodiment, said at least one switchable segment may be free of any electrodes and/or electronic conductors arranged both in front of said one or more openings in the symbol defining layer and in front of said first electrode layer as seen in the viewing direction. Furthermore, said at least one switchable segment may be free of any electrodes and/or electronic conductors arranged between the first electrode layer and the symbol defining layer. This is advantageous as it provides a simpler manufacturing process. Further, additional electrodes and/or electronic conductors may impair the electrochemical reactions and/or give rise to electrochemically parasitic reactions, leakage currents and/or unwanted migration of ions.

According to one embodiment, the directly addressable display device comprises a power supply, which is electrically connected to each one of the addressing electrodes e.g. via connectors. The connectors may e.g. be battery connectors, i.e. means arranged to receive and fasten a battery, or blade connectors arranged to receive fastening means electrically connected to a larger power supply (than a house hold battery), the list of connectors is non exhaustive as there are numerous ways to connect a power supply to an electrode, which are all well known to the man skilled in the art.

According to one exemplifying embodiment, the directly addressable display device is attached to a circuit board comprising connectors for receiving a power supply and optionally an addressing circuit.

According to one exemplifying embodiment, the directly addressable display device further comprises:
- an addressing circuit; and
- connectors arranged to receive a power supply, which connectors are electrically connected to said addressing circuit; and
wherein the carbon electrode layer of each switchable segment is electrically connected by a separate electric conductor to the addressing circuit to enable individual control of the potential applied to the carbon electrode layer.

Furthermore, according to one embodiment the only electronic conductors that are arranged in front of the openings in the symbol defining layer, as seen in the viewing direction, are the first electrode layer and the counter electrode layer, respectively.

According to one embodiment, the part for a directly addressed or directly addressable display comprises at least two switchable segments, and said electrolyte layer is ionically separated between adjacent switchable segments and said counter electrode layer is electronically separated between adjacent switchable segments. This is advantageous as it enables to display two symbols in the display independently of each other.

According to one embodiment, the first electrode layer of the part for a directly addressed or directly addressable display device extends continuously between adjacent switchable segments. This is advantageous as it facilitates the manufacturing of the display due to that less processing steps are needed, as well as it might improve the visual perception of the display as there are no interruptions marking the edges of the switchable segments.

According to one embodiment, the symbol defining layer of the part for a directly addressed or directly addressable display device is continuous and comprises openings forming said symbols. This is advantageous as it facilitates the manufacturing of the display due to that less processing steps are needed, as well as it might improve the visual perception of the display as there are no interruptions marking the edges of the switchable segments.

According to one example, a ground potential is applied to the first electrode layer at at least one point of the layer. Thus in use, an oxidation or reduction of the first electrode layer for one switchable segment may be achieved by arranging a sufficient, non-zero, electric potential difference between the first electrode layer and the counter electrode of one switchable segment. Another switchable segment can be prevented from reacting by disconnecting the counter electrode of this pixel, e.g. by physical disconnection or by using a high impedance state on the corresponding output of an addressing circuit. In other words, each switchable segment may be individually switched by oxidation or reduction of the first electrode layer by applying a potential difference between the first electrode layer and the counter electrode of the switchable segment of interest. For a switchable segment which has been subject to a colour-change due to an applied non-zero electrical potential difference between the first electrode layer and the counter electrode, applying a zero electric potential will result in spontaneous bleaching of the switchable segment, and by reversing the electric potential (i.e. applying a reversed potential difference of sufficient magnitude between the first electrode layer and the counter electrode) will result in active bleaching of the switchable segment. Active bleaching results in shorter switching time as compared to spontaneous bleaching, but there is also a potential risk of degradation of the first electrode layer when using active bleaching.

According to one exemplifying embodiment the directly addressable display further comprises at least one first addressing electrode arranged in electronic contact with said first electrode layer, and a set of second addressing electrodes, wherein each of said second addressing electrodes is arranged in electronic contact with a respective one of said carbon layers. Furthermore, each one of said first and second addressing electrode(s) are connectable to an addressing device configured to provide a variable potential difference between the second addressing electrode(s) of said at least one switchable segment and said at least one first addressing electrode to switch the colour of said first electrode layer. If the potential difference has been applied across n switchable segments, the colour switch of said first electrode layer occurs within each one of these n switchable segments; n being a positive integer.

According to one exemplifying embodiment, the directly addressable display has only one switchable segment. According to an alternative embodiment, the directly addressable display has at least two switchable segments. In an addressable display with at least two switchable segments, the electrolyte layer of one switchable segment may be ionically isolated from the other electrolyte layer(s) of the other switchable segment(s).

According to one embodiment, the colour of the electrolyte layer and the colour of the symbol defining layer are substantially the same, such that a visual appearance of the display in the off state results in that the symbols to be displayed are less discernable compared to if the colour of the electrolyte layer and the colour of the symbol defining layer were substantially different. This is advantageous as it improves the visual appearance of the display in the off state, as the symbols to be displayed are less discernable compared to if the colour difference was greater. Moreover, the appearance of the colour of the electrolyte layer and the appearance of the colour of the symbol defining layer, as perceived by a normal viewer, is the same, or substantially the same, or close to the same, colour. In other words, the colour of the electrolyte layer and the colour of the symbol defining layer are perceived by a normal viewer as being the same, or close to the same, colour. For example, colours which are perceived as being the same by a normal viewer may be different shades of the same colour or colours which are close to each other in a colour space. Hence light grey and grey may, as well as pale green and pale blue, be perceived as substantially the same colour.

According to one embodiment, the part for a directly addressed or directly addressable display device is a fixed image display device which is arranged to display at least two symbols having different shapes.

According to one embodiment, the step of printing a symbol defining layer in the method according to the second aspect of the invention, further comprises the step of providing a continuous symbol defining layer comprising openings forming said at least two symbols.

The step of printing an electrolyte layer in the method according to the third aspect of the invention, further comprises the step of printing the electrolyte layer between said symbol defining layer and said counter electrode layer such that the electrolyte layer covers and extends to the side of the one or more openings of the symbol defining layer.

Furthermore, the display device architecture according to the present invention allows for efficient and low cost manufacturing using conventional printing techniques and few layers. The symbol defining layer may give the interface between the first electrode layer and electrolyte layer, and hence the displayed symbol, any shape, such as a square, triangle, circle, etc. It may also be arranged as a figurative symbol, such as a flower or trademark, or as one or several letters in any alphabet, or as one segment in a 7-segment or 14-segment display or as a signature, or as a combination of the above. The shape of said interface is not limited to the examples mentioned above, but is free to be given any shape or combination of shapes, preferably defined by the symbol defining layer.

Furthermore, the fixed image display device of the present invention advantageously enables efficient manufacturing using conventional printing techniques and equipment, such as screen printing, flexography, gravure, offset lithography and inkjet printing. In particular, low-cost printing which may be defined as manufacturing using conventional printing methods in normal regular ambient conditions, such as room temperature, is advantageously realized. Low-cost printing may e.g. comprise manufacturing in a temperature interval around room temperature of 15 to 30 degrees Celsius, such as between 10 and 60 degrees Celsius, or between 10 and 35 degrees Celsius or between 15 and 30 degrees Celsius. In other words, the arrangement or printing of one or several of the different layers of the display device is performed in a temperature interval around room temperature. The manufacturing may further comprise baking processes involving higher temperatures e.g. for increasing the speed of drying, settling and/or curing layers and segments of the fixed image display device, such as the electrolyte segments. In addition, low-cost printing manufacturing may further advantageously entail manufacturing, such as arrangement or printing of one or several of the different layers in normal pressure conditions, such about 100 kPa or 1 atm, or in pressure conditions between 80 kPa and 120 kPa, and in ambient air conditions. Hence, in low-cost printing manufacturing, expensive and cumbersome equipment and/or manufacturing conditions, such as vacuum and/or clean room facilities, or similar facilities, are not required or may be significantly reduced.

The vertical and pixelated or segmented architecture of the fixed image display device according to the present invention, further improves the display characteristics by improving colour contrast and sharpness of the fixed image to be displayed. In particular, the segmented design, comprising separate and isolated electrolyte segments restricts the electrochemical reaction of each one to a specified area. Hence, undesired spreading effects, or migration, of electrochemical reaction of each active switchable segment into undesired regions, which would reduce image quality and sharpness is efficiently reduced. It is, in particular, the retention time of the image upon disconnecting the electric potential that is prolonged by the isolated electrolyte segments.

According to one embodiment all materials, or all layers, forming the fixed image display device are flexible, such that the resulting fixed image display device is flexible, and/or rollable. In other words it may be repeatedly bent or rolled without breaking. When bending or rolling the device the radius of curvature may be less than e.g. half the diameter of the display area of the display device.

According to an exemplifying embodiment, the fixed image display device further comprises a transparent substrate which is arranged, in the viewing direction, in front of the first electrode layer, wherein the substrate continuously covers the active area of first electrode layer. The substrate advantageously protects the fixed image display device and improves its life time. The provision of a top layer may further facilitate efficient low-cost manufacturing wherein the top layer may be used as a carrier onto which the first electrode layer is printed. In turn, the first electrode layer may be made thinner which improves the switching properties of the display device.

In general, devices according to the invention are operated by applying an electric potential difference across the electrolyte, i.e. by applying a first potential to said first electrode layer, and a second potential different from said first potential to said counter electrode layer, such that an electric field within said solidified electrolyte is created. The electric field initiates a reduction or oxidation of said first electrode layer, which reaction causes a colour change of said first electrode layer, provided that the potential is sustained long enough. In other words, the colour changed is caused by a potential difference across said electrolyte.

It is to be understood that the switching time or the colour change of the display device is in general determined by e.g.:
- the mobility of ions in the electrolyte, the higher the mobility the shorter the switching time;
- the magnitude of the ionic current in the electrolyte, which is determined both by the ion mobility in the electrolyte as well as the electrolyte volume;
- the choice of electrochemically active and/or electrochromic material;
- the volume of the electrochemically active and/or electrochromic material that needs to be reacted in order to alter the colour of the electrochromic material;
- the amplitude of the applied voltage; the higher the voltage the shorter the switching time, and vice versa.

Basically there is no limitation or restriction to the thickness of said first electrode layer of the display device, but it may e.g. be between 0.1 µm and 7 µm, mainly due to manufacturing and flexibility point of views, where the chosen thickness depends on the desired device property; a thinner layer normally equals a shorter switching time of the display device, while a thicker layer normally equals in higher colour contrast. Moreover, the thickness of said counter electrode layer of the display device may in an embodiment be between 0.1 µm and 40 µm. When choosing the thickness of the layers the following may be kept in mind, a too thin counter electrode layer could degrade the colouring performance of said first electrode layer and a too thick layer could reduce the bending resistance and/or the mechanical pressure resistance of the display device. Moreover, the thickness of said electrolyte layer of the display device may in an embodiment be between 1 µm and 20 µm, or between 1 µm and 100 µm. Normally, the thinner the layer becomes, the better the flexibility, but the contrast decreases at the same time. The thickness of each layer is measured along a viewing direction normal to the respective layer of the switchable segment. According to optional methods of providing the respective layers, they may be provided by a number of conventional printing techniques, such as spin-coating, ink-jet printing, screen-printing, ionic self-assembled multilayer, aerosol-jet printing or bar-coating.

### Definitions

Viewing direction: The viewing direction is the geometrical direction along which the viewer normally views the display. In other words the viewing direction is a direction referring to the origin of a geometrical axis extending from the viewer. In other words, the viewing direction coincides with the normal vector of the first electrode layer. In more detail, the viewing direction runs from the viewer towards the front side of the display device.

Normal viewer: A normal viewer is a human observer with a perfectly normal colour vision as defined by a normally distributed population.

The directly addressable display device may be fully or partly assembled. A fully assembled display device may comprise a power supply and/or an addressing circuit, such as a logic circuit and/or a micro controller; while in a not yet fully assembled directly addressable display device may still not have been connected to all or some of these parts. Furthermore, the directly addressable display device may or may not comprise connection means to the addressing circuit.

Power supply: A power supply may be small scale power supply such as e.g. a battery, a supercapacitor or a solar cell (e.g. a PV cell), or any other kind of energy harvesting device (e.g. piezoelectric or triboelectric devices), or it may be a large scale power supply such as a linear DC power supply, or a mains voltage supply. If desired or appropriate the power supply may be connected to an AC/DC converter.

Dynamic image display device: a dynamic image display device comprises control means for displaying varying images on the same portion/area of the display, such that the displayed image may be changed.

Fixed image display: a fixed image display device is not arranged to varying images on the same portion/area of the display. Instead, the fixed image display device is arranged to, upon activation, display one single fixed image. This single fixed image may alternately be turned on and off, e.g. by means of a control electronics.

Off state: the off state of the device is when the power is turned off, and all switchable segments have substantially the same colour and appearance, i.e. a voltage applied across the display, if any, is not sufficiently high to cause a change in colour of the pixels of the display. Further, this colour of the switchable segments is referred to as the background colour of the display.

On state: the on state of the device is when the power is turned on and a subset of the switchable segments of the display has a colour which is substantially different from the background colour of the display. This colour is referred to as the motif colour of the display. The colour change of the switchable segments is initiated and progressed by a voltage difference being applied across the electrolyte layer.

Layer: according to one embodiment, the display device comprises "layers" of different materials. These layers can be continuous or discontinuous, and are preferably arranged on and carried by a plastic substrate. Further, the term layer normally encompass all of the same material in the same plane, regardless whether this material is discontinuous or interrupted in such a way as to form "islands" in the plane, which "islands" are isolated from each other. As stated above, one layer can be continuous and shared by more than one switchable segment. In other words, the display device may comprise a continuous layer forming e.g. the first electrode layer in a plurality of said switchable segments. In yet other words, the first electrode layers in a plurality of switchable segments may each be a separate portion of a continuous first electrode layer. The opposite may also occur, i.e. that a layer is discontinuous between different switchable segments. In other words, this layer is isolated or spatially separated between two switchable segments.

First electrode layer: a "first electrode layer" in relation to this invention is composed of one material or a combination of materials. The material(s) may be organic or inorganic, low molecular or polymeric. Such a first electrode layer, independent of whether it is composed of one material or is an ensemble of more than one material, combines the following properties: at least one material is electrically conducting in at least one oxidation state, and at least one material is electrochromic, i.e. exhibits colour change as a result of electrochemical redox reactions within the material, such as e.g. a reduction reaction in the first electrode layer. Optionally, the first electrode layer may comprise an electrochemically active material.

Electrochemically active: an "electrochemically active" layer according to the present invention is a piece of a material having an electronic conductivity that can be electrochemically altered through change of the redox state of said material. Normally, at least a portion of an electrochemically active element is in ionic contact with an electrolyte, and the electrochemically active element may furthermore be integrated with an electrode, being composed of the same or different materials. The electrode may also be arranged on top of said electrochemically active material.

Electrochromic display: an "electrochromic display" is in relation to this invention a device comprising at least one first electrode layer, which device is arranged such that a colour change of the first electrode layer is visually detectable in reflection and/or in transmission.

Colour change: when reference is made to "colour change", this is also meant to include changes in optical density or reflectance, so that "colour change" for example takes into account changes from blue to red, blue to colourless, colourless to blue, dark green to light green, light blue to blue, grey to white or dark grey to light grey alike.

Sharpness: in relation to this invention, when sharpness of an image or symbol is discussed, this relates to how the image is perceived by a naked eye. The opposite to a sharp image is e.g. a blurred image, i.e. an image with poorly defined boundaries between colour switched areas and non-colour switched areas.

Symbol portion: In relation to this invention the symbol portion of a first electrode layer is defined by the interface between the electrolyte and the first electrode layer. In more detail, the symbol portion is the volume of a first electrode layer, which on its one side is covered by electrolyte. When a potential is applied to the first electrode layer, the colour change of the layer might not correspond exactly to the extension of the interface between the electrolyte and the first electrode layer, i.e. to what is defined as the symbol portion. The colour change might e.g. spread outside the interface between the electrolyte and the first electrode layer, as well as through the first electrode layer to the side opposite the one covered by electrolyte.

A set of: in relation to this invention the expression "a set of" may be used also when the set only has one item. So, e.g. a single second addressing electrode may be referred to as a set of addressing electrodes.

Electrodes: The addressing electrodes may comprise any electron conducting material, such as electrically conducting polymers, metal, conducting carbon, titanium, platinum, graphite, graphene, noble metals and inert metals or combinations of such electron conductive materials. The electrodes may further comprise electrochemically inert metals such as gold or other conducting materials suitable for being in contact with electrochemically active layers. Normally, conducting material suitable for being in contact with electrochemically active layers is inert such that they do not give rise to substantial electrochemical reactions. These materials may e.g. be provided as an ink or paste which is arranged on the insulating substrate during a manufacturing, or pre-manufacturing process.

The electrodes are preferably elongated and may for example be band shaped or arranged as threads or thread shaped. The electrodes may for example be arranged of a layer of conductive polymers or arranged of metal threads or lines. Further, the electrodes may be arranged in straight parallel lines but may also be curved and have irregular shapes. In other words, the switchable segments which are arranged in a matrix are not necessarily arranged in straight rows and columns, but may be arranged in a more irregular way, as long as each electrode is electronically isolated from the other addressing electrodes.

Electronic conductor: in relation to this invention electronic conductor bears the same meaning as electrode.

Electric conductor: in relation to the invention an electric conductor is a structure which can conduct electrons and/or ions. An electric conductor may be equal to an electrode or electronic conductor; or be a pure ionic conductor. An electric conductor may also comprise two sequentially arranged portions, wherein one of the portions is arranged to solely or mainly conduct ions, and the other portion is arranged to solely or mainly conduct electrons. An electric conductor may also comprise several alternating ionically and electronically conductive portions. In other words, an electric conductor in direct contact with a voltage supply in one end, and one of the counter electrodes in the other end may be used to apply a potential to the counter electrode.

Symbol defining layer: The symbol defining layer is electrically insulating, and has a low permeability for water and ionic species. The symbol defining layer is formed by printing a suitable composition forming the layer after curing. The printable composition may be curable by irradiation or by solvent evaporation, it may be transparent or opaque and it may be colourless or coloured.

Examples of materials used for the symbol defining layer with substantially electrically and ionically insulating properties are
solvent based printing inks or varnishes, e.g. Plastijet XG 383, a varnish, or Plastijet XG025, a white opaque printing ink, both sold by Fujifilm Sericol Ltd. In addition a range of lacquers, varnishes and resins can be used in the invention. Such resins or lacquers can be based on shellac, alkyd resins, polyvinylacetate, polyvinylbutyral, polyvinylchloride, polystyrene, polyesters and low molecular polyolefins. Further examples are UV curable dielectric 5018A purchased from DuPont, Uviplast UV curing ink Omniplus UL-025 from Fujifilm Sericol, Ultragraph UVAR from Marabu Printing Inks. The list is non exhaustive as there many other suitable materials available.

Substantially electrically and ionically isolative: It should be understood that the phrasing where a material is *substantially electrically and ionically isolative* is indicating that the material is close to fully, or fully, electrically and ionically insulating. Thus, the wording *isolative* and *insulating* are used interchangeably throughout the application. For a material being substantially electrically and ionically isolative, or electrically and ionically insulating, no, or very few, electrons or ions are permitted to pass through the material. Examples of materials for the symbol defining layer providing a substantially electrically and ionically isolation/insulation are given in the section just preceding this one, the list is non exhaustive.

Irradiation curable printing compositions for the symbol defining layer can be chosen among commercial printing inks and printable varnishes such as Electrodag PD-011B^{™} from Henkel GmbH, UVIJET Omniplus UL-025 from Fujifilm Sericol Ltd., DuPont 5018A, a clear varnish from DuPont, Ultragraph UVAR från Spacio. Further, monomers and other compounds may be added to modify the surface tension of the commercial inks to give a symbol defining layer with good coverage and with few pin-holes.

Irradiation curable printing compositions for the symbol defining layer can also be prepared from a suitable blend of polymerizable molecules, photo-initiators and agents for controlling wetting, flow and rheology of the composition.

Polymerizable molecules could be of the type polymerizing by a radical mechanism such as acrylates, methacrylates, acrylamides and other vinyl compounds. The polymerizable molecules could contain one, two, or more polymerizable groups.

### Radical polymerizable molecules

### Monofunctional monomers

Among the (meth)acrylate monomers that can be utilized in this invention are, for example, the acrylaytes: Among the (meth)acrylate monomers that can be utilized in this invention are, for example, the acrylaytes: isoamyl-, stearyl-, lauryl-, octyl-, decyl-, isomyristyl-, isostearyl-, 2-ethylhexyl diglycol-, 2-hydroxybutyl-, butoxyethyl-, ethoxydiethylene glycol-, methoxydiethylene glycol-, methoxypolyethylene glycol-, methoxypropylene glycol-, phenoxethyl-, tetrahydrofurfuryl-, isobornyl-, 2-hydroxyethyl-, 2-hydroxypropyl-, 2-hydroxy-3-phenoxypropyl-, and t-butylcycohexyl acrylate.

### Difunctional monomers

Difunctional (meth)acrylates that can function in the invention are, for example triethylene glycol-, tetraethylene glycol-, polyethylene glycol-, tripropylene glycol-, polypropylene glycol-, 1,4-butanediol-, 1,6-hexanediol-, 1,9-nonanediol-, neopentylglycol-, dimethyloltricyclodecane-, neopentylglycol- and polytetramethylene glycol diacrylate.

### Polyfunctional monomers

Among polyfunctional (meth)acrylates the following can be used in the invention, di(trimethylolpropane) tetraacrylate, pentaerythritol triacrylate, pentaerythritol tetraacrylate, trimethylolpropane ethoxylate triacrylate, trimethylolpropane propoxylate triacrylate, trimethylolpropane trimethacrylate, tris[2-(acryloyloxy)ethyl] isocyanurate, and 1,3,5-Triacryloylhexahydro-1,3,5-triazine.

Photoinitiators are molecules decomposing to generate radical species that can initiate a polymerization reaction upon irradiation. Radical generating photoinitiators can be of the type arylketones, such as diarylketones, benzoquinone for example, monoarylketones, such as 1-Hydroxy-Cyclohexyl Phenyl Ketone (Irgacure^{™} 184) and its derivatives, benzyl- and benzoin compounds, thioxanthones, benzoquinones, such as anthraquinone derivatives, phoshineoxides, such as diphenyl(2,4,6-trimethylbenzoyl)phosphine oxide, (Lucerin^{™} TPO), or thioxanthones such as ITX.

Printing compositions for the symbol defining layer curing by solvent evaporation can be chosen among commercial printing inks. Examples of solvent based printing inks or varnishes that can be applied in the inventions are Plastijet XG 383, a varnish, or Plastijet XG025, a white opaque printing ink, both sold by Fujifilm Sericol Ltd.

In addition a range of lacquers, varnishes and resins can be used in the invention. Such resins or lacquers can be based on shellac, alkyd resins, polyvinylacetate, polyvinylbutyral, polyvinylchloride, polystyrene, polyesters and low molecular polyolefins.

In more detail, the insulating material is provided in the intermediate regions between the electrolyte segments and the electrochromic first electrode layer in order to prevent short-circuits, while openings in the insulating material allow for an ionic contact between the electrolyte segments and the electrochromic first electrode layer, hence, the shape of the openings define the image of the display device. The insulating material is preferably processable from solution, such that printing or coating techniques can be used for the deposition of the symbol defining layer, e.g. screen printing, inkjet printing, aerosol-jet printing, flexo printing, gravure printing, offset printing, bar-coating. Solidification, or curing, of the insulating layer after the deposition is preferably performed by a cross-linking reaction initiated by exposure to ultra-violet light or by thermal means. From an aesthetic point of view, in order to improve the colour contrast, the insulating material perceived as the background is preferably perceived having the same colour as the superimposed colour of the electrochromic first electrode layer and the electrolyte layer.

Direct electrical contact: Direct physical contact (common interface) between two phases (for example between electrochemically active organic material and electrolyte) that allows for the exchange of charges through the interface. Charge exchange through the interface can comprise transfer of electrons between electrically conducting phases, transfer of ions between ionically conducting phases, or conversion between electronic current and ionic current by means of electrochemistry at an interface between for example counter element and electrolyte or electrolyte and electrochromic element, or by occurrence of capacitive currents due to the charging of the Helmholtz layer at such an interface.

Ionic contact between two elements is provided by at least one material capable of transporting ions between the two elements. An electrolyte, in direct contact (common interface) with a first and a second electrochemically active layer, is one example of a material which may provide ionic contact between the two electrochemically active layers. The electrolyte may hence be referred to as being in ionic contact with the two electrochemically active layers.

Two materials may be in electronic contact with each other, e.g. via a third material. Electronic contact between two elements is provided by at least one material capable of transporting electrons between the two elements. A layer of carbon, in direct contact (common interface) with a first and a second electrochemically active layer, is one example of a material which may provide electronic contact between the two layers. The layer of carbon may hence be referred to as an electronic conductor, or electronically conductive.

Direct physical contact: Common interface between two materials or layers.

The electrochromic display device may comprise, as electrochromic material and/or electrochemically active material, a polymer which is electrically conducting in at least one oxidation state, and optionally also comprises a polyanion compound.

Electrochromic polymers for use in the electrochromic display device of the invention are for example selected from the group consisting of electrochromic polythiophenes, electrochromic polypyrroles, electrochromic polyanilines, electrochromic polyisothianaphthalenes, electrochromic polyphenylene vinylenes and copolymers thereof. In an embodiment, the electrochromic polymer is a homopolymer or copolymer of a 3,4-dialkoxythiophene, in which said two alkoxy groups may be the same or different or together represent an optionally substituted oxy-alkylene-oxy bridge. In yet an embodiment, the electrochromic polymer is a homopolymer or copolymer of a 3,4-dialkoxythiophene selected from the group consisting of poly(3,4-methylenedioxythiophene), poly(3,4-methylenedioxythiophene) derivatives, poly(3,4-ethylenedioxythiophene), poly(3,4-ethylenedioxythiophene) derivatives, poly(3,4-propylenedioxythiophene), poly(3,4-propylenedioxythiophene) derivatives, poly(3,4-butylenedioxythiophene), poly(3,4-butylenedioxythiophene) derivatives, and copolymers therewith. The polyanion compound is then preferably poly(styrene sulfonate).

As is readily appreciated by the skilled man, in alternative embodiments of the invention, the electrochromic material comprises any non-polymer material, combination of different non-polymer materials, or combination of polymer materials with non-polymer materials, which exhibit conductivity in at least one oxidation state as well as electrochromic behaviour. For example, one could use a composite of an electrically conducting material and an electrochromic material, such as electrically conductive particles such as tin oxide, ITO or ATO particles with polymer or non-polymer electrochromic materials such as polyaniline, polypyrrole, polythiophene, nickel oxide, polyvinylferrocene, polyviologen, tungsten oxide, iridium oxide, molybdenum oxide and Prussian blue (ferric ferrocyanide). As non-limiting examples of electrochromic elements for use in the device of the invention, mention can be made of: a piece of PEDOT-PSS, being electrochromic as well as both electrically and ionically conducting; a piece of PEDOT-PSS with Fe2+ /SCN-, PEDOT-PSS being conducting and electrochromic as mentioned above and Fe2+ /SCN- being an additional electrochromic component (see below); a piece composed of a continuous network of conducting ITO particles in an insulating polymeric matrix, in direct electrical contact with an electrochromic WO3-coating; a piece composed of a continuous network of conducting ITO particles in an insulating polymeric matrix, in contact with an electrochromic component dissolved in an electrolyte. As described above, an electrochromic display device may comprise a further electrochromic material for realization of displays with more than one colour. This further electrochromic material can be provided within the first electrode layer or the solidified electrolyte, which then for example comprises an electrochromic redox system, such as the redox pair of colourless Fe2+ and SCN- ions on one hand, and of red Fe3+ (SCN)(H2O)5 complex on the other. By way of further, non-limiting example, such materials may be selected from different phenazines such as DMPA - 5,10-dihydro-5,10-dimethylphenazine, DEPA - 5,10-dihydro-5,10-diethylphenazine and DOPA - 5,10-dihydro-5,10-dioctylphenazine, from TMPD - N,N,N',N'-tetramethylphenylenediamine, TMBZ - N,N,N',N'-tetramethylbenzidine, TTF - tetrathiafulvalene, phenanthroline-iron complexes, erioglaucin A, diphenylamines, p-ethoxychrysoidine, methylene blue, different indigos and phenosafranines, as well as mixtures thereof.

Solidified electrolyte: for the purposes of the invention, "solidified electrolyte" means an electrolyte, which at the temperatures at which it is used is sufficiently rigid that particles/flakes in the bulk therein are substantially immobilized by the high viscosity/rigidity of the electrolyte and that it does not flow or leak. In the preferred case, such an electrolyte has the proper rheological properties to allow for application of this material on a support in an integral sheet or in a pattern, for example by conventional printing methods. After deposition, the electrolyte formulation should solidify upon evaporation of solvent or because of a chemical cross-linking reaction, brought about by additional chemical reagents or by physical effect, such as irradiation by ultraviolet, infrared or microwave radiation, cooling or any other such. The solidified electrolyte may for example comprise an aqueous or organic solvent-containing gel, such as gelatine or a polymeric gel. However, solid polymeric electrolytes are also contemplated and fall within the scope of the present invention.

According to one example, the solidified electrolyte comprises a binder. For example, the binder has gelling properties and is e.g. selected from the group consisting of gelatine, a gelatine derivative, polyacrylic acid, polymethacrylic acid, poly(vinylpyrrolidone), polysaccharides, polyacrylamides, polyurethanes, polypropylene oxides, polyethylene oxides, poly(styrene sulphonic acid), and salts and copolymers thereof; and may optionally be cross-linked. Polymers having quaternary ammonium groups, such as polymers bearing imidazolium groups. Examples are polyquaternium grades, preferably copolymers with quaternized vinylimidazole units, such as Luviquat Excellence provided by BASF. The solidified electrolyte may further comprise an ionic salt, for example magnesium sulphate if the binder employed is gelatine. The solidified electrolyte may further contain a hygroscopic salt such as magnesium chloride to maintain the water content therein.

Examples of opacifiers that may be used in the electrolyte are: Titanium dioxide, Zinc oxide, Zirconium oxide, Cadmium sulfide, Cadmium selenide, Sodium aluminosilicate, Chromium (III) oxide, Carbon black.

The electrolyte preferably has rheological properties or a viscosity which makes it suitable for printing e.g. by ink-jet printing or by a roll-to-roll process. Exemplifying intervals of electrolyte viscosity (mPas) for different printing methods are:
Inkjet printing: 1-20
Flexo printing: 20-400
Screen printing: 1000-100000
Offset printing: 1000-100000
Gravure printing: 20-200.

According to one exemplifying embodiment the electrolyte or electrolyte composition is substantially free of small cations. The electrolyte or electrolyte composition may comprise cations having a molecular weight distribution wherein less than 20 wt%, or less than 15 wt% or less than 10 wt% or less than 5 wt% or less than 3 wt% of the cations have a molecular weight lower than 1 000 g/mole. That is, more than 80 wt%, or more than 85 wt% or more than 90 wt% or more than 95 wt% or more than 97 wt% of the cations have a molecular weight higher than 1000 g/mole.

An electrolyte substantially free of small cations is advantageous for preventing the lateral migration of ions which could cause blurring along the electrolyte edges of the segments.

Further, according to one example the cations of the electrolyte composition has a molecular weight (Mw) between 10000 and 100000 g/mole and more preferably between 20000 and 75000 g/mole.

In all embodiments of the invention, the colouring of each switchable segment is provided by a change in redox state of said electrochromic and electrochemically active organic polymer material, which causes a change of colour of the electrochromic material. In other words, the electrolyte is normally free of colorants such as pH dyes, i.e. dyes which changes colour in response to the surrounding pH. In yet other words, the colour of the electrolyte normally remains unchanged or substantially unchanged during a colour switching of the switchable segment. In yet other words, the colour of the electrolyte is non-switchable, i.e. the colour of the electrolyte remains the same or remains substantially the same when a voltage is applied across the display sufficiently long for at least causing a colour switch, or colour change, of said first electrode layer. In addition to what has been stated with respect to the electrolyte being free of colorants, which changes colour when a potential difference is applied between said first electrode layer and second counter electrode layers, the electrolyte may comprise colorants or opacifiers for reducing the transparency of the electrolyte. The opacifiers normally do not change colour when a voltage difference is applied between the first electrode layer and the counter electrode layer. I.e. the colour of the opacifiers normally remains the same or substantially the same.

Furthermore, in each switchable segment said first electrode layer and said counter electrode layer are ionically connected and electronically isolated, or substantially electronically isolated, from each other by at least one layer being arranged between said first electrode layer and the counter electrode layer, wherein the at least one layer comprises the electrolyte layer. According to one embodiment the electrolyte layer is ionically conductive and electronically isolative/insulating, or substantially electronically isolative/insulating, i.e. the electrolyte layer does not transport electrons to any substantial extent. If the electrolyte layer were not substantially electronically isolative/insulating, this material would cause an electronic short circuit of the device, which would normally prevent or at least impair a colour change of the first electrode layer.

In summary, the material selection and the vertical architectural configuration of the display device according to the present invention allow for a manufacturing process comprising conventional printing techniques. Such conventional printing techniques may encompass bar coating, screen printing, spin-coating, ink-jet printing, aerosol-jet printing, or any other such manufacturing procedure. The architecture of the display device also allow for use of manufacturing procedures that are easily scalable to larger scale manufacturing, which, in turn, allow for faster and low price manufacturing. For example, a display arrangement comprising a plurality of display devices according to the present invention may be manufactured in a roll-to-roll manufacturing procedure.

The layers of the display device are advantageously provided on the substrate by means of printing techniques. In order to be printable, the materials should preferably have suitable rheological properties. Inks comprising electrically conductive polymers or conducting carbon are examples of such printable materials. There are a number of different suitable printing techniques, such as bar-coating, screen-printing, inkjet printing, aerosol-jet printing, spin-coating etc.

Generally, other objectives, features, and advantages of the present invention will appear from the following detailed disclosure, from the attached dependent claims as well as from the drawings. Embodiments of the invention will now be described, by way of example, with reference to the accompanying drawings. It should be understood that the drawings are not true to scale and, as is readily appreciated by a person skilled in the art, dimensions other than those illustrated in the drawings are equally possible within the scope of the invention.

### Brief Description of Drawings

Embodiments of the invention will now be described, by way of example, with reference to the accompanying drawings, wherein:
Fig. 1a is a schematic exploded perspective view of a part for a display device according to the invention.
Figure 1b shows the relative positions of the symbol defining layer and the EC-layer and therefore also the rim portion.
Fig 1c illustrates schematic top views of each layer of part for a display device according to the invention, arranged in the same order as they faces the viewer from top to bottom.
Fig 1d illustrates schematic top views of the layers shown in Figure 1c as they are arranged on top of each other, one by one.
Fig 1e is a schematic cross-sectional view of a part for a display device according to the invention, and as illustrated in e.g. Fig 1a and 1c.
Fig 1f is a schematic illustration of a finalized or assembled display device.
Figures 2a-2c show the positions of the symbol defining layer relative the EC-layer.
Figures 3a-3f are top views of the layers in a 2.5 digit display arranged according to the invention.
Figure 4a illustrates a photograph of a display falling outside the scope of these claims.
Figure 4b illustrates a photograph of a display within the scope of these claims.
Figure 5 illustrates color contrast vs. applied voltage.

The drawings are not drawn to scale.

### Detailed Description of Embodiments of the Invention

In the drawings, similar or equal elements are referred to by the same reference numerals.

Figure 1a-1e are schematic drawings illustrating one example of a part for a directly addressed or directly addressable display device. Figure 1a illustrates the layers one by one and also shows the order of the layers as arranged one after another in the viewing direction. Figure 1b illustrates the positions of the symbol defining layer (the gray area in Fig 1b) relative the EC-layer (the black areas in Fig 1b) by a superposition of these layers. Fig 1c illustrates schematic top views of each layer of part for a display device according to the invention, arranged in the same order as they faces the viewer from top to bottom, Figure 1d illustrates the layers when they are piled on top of each other one after another, and Figure 1e is a schematic cross-sectional view of two of the segments of the display illustrating the extension of the layers in a direction transversal to the viewing direction of the display. Figure 1f is a top view of the device.

In more detail, Figures 1a-1d and 1f illustrate a directly addressable display device comprising nine switchable segments, each switchable segment being arranged for displaying at least one symbol, which is switchable between an on-state and an off-state. In Figure 1f all switchable segments are in their on-state. The switchable segments are numbered 1 to 9, from left to right. The symbol 'PIN' is displayed by switchable segment number 1, i.e. the leftmost switchable segment. A star-symbol, '*', is displayed by each one of switchable segments number 2-7. A question mark-symbol, '?', is displayed by switchable segment number 8, and the symbol 'OK' is displayed by switchable segment number 9. The symbol displayable by the respective switchable segments, may be turned on and off independently of the state of the other switchable segments. In operation, normally the symbol 'PIN' is displayed as the display switches on, one star is lit for each character that the user enters or button that the user presses, and upon verification of the PIN-code an OK-symbol is displayed if a match is found, and a question mark if no match is found.

Moreover, as seen in Figure 1f the display device may be connected to an addressing circuit 64, which in turn is connected to a power supply 66. Each carbon electrode 140 of the switchable segments 1-9 is connected to a respective output of the addressing circuit 64 via addressing electrodes 62 and/or electronic conductors, there is also a holder or clip 68. The power supply 66 may power the display device, optionally via the addressing circuit 64. The power supply and the optional addressing circuit thereby provides for individual control of the potential difference over each switchable segment 1-9 by the application of different potentials to the carbon electrode layer 140 and the first electrode layer 150. In other words, one or more power supplies may be directly electronically connected to a respective one of said carbon electrodes and the first electrode layer 150. According to one example the holder 68 is a 1.25 mm FPC/FFC BackFlip^{™} Housing, part number 49597-2017 provided by Molex^{®}. However, there exists many different alternatives for connecting the carbon electrodes to the electric conductors of a circuit board, which is well known to the person skilled in the art.

Figure 1b exemplifies the positions of the symbol defining layer (the gray area in Fig 1b) relative the EC-layer (the black areas in Fig 1b) by a superposition of these layers, and illustrates the lateral extension of these layers, i.e. the extension of these layers in the x- and y-direction, where the x-direction is the upwards direction of the display, and the y-direction is the sidewards direction of the display. In Fig 1b the positions of the different segments 1-9 are also indicated. The separation between the symbol defining layer and the EC-layer and (the white areas in Fig 1b) illustrates the extension of the uncovered rim portions (20) according this example.

As illustrated in Figure 1e, each switchable segment 2, 3 comprises:
- a first electrode layer 110 comprising electrochromic and electrochemically active organic polymer material being electrochemically switchable between two different visually detectable colouring states;
- a counter electrode layer comprising an EC-layer 160 and a carbon layer 140, wherein the carbon layer comprises electronically conductive carbon and the EC-layer comprises electrochemically active organic polymer material, wherein said counter electrode layer in a viewing direction is arranged behind said first electrode layer;
- an electrolyte layer 130, which electrolyte layer is solidified and arranged spatially between, and in ionic contact with, said first electrode layer 110 and said EC-layer 160;
- a symbol defining layer 120, which is arranged in direct contact with said first electrode layer 110 and which symbol defining layer 120 comprises one or more openings which encloses a portion of said electrolyte layer 130 and which opening defines the shape of said symbol. Each electrolyte segment is arranged such that it fills, covers and extends to the side of the respective openings in the symbol defining layer 120. Consequently, behind the symbol defining layer the surface area of the respective electrolyte segment is larger than the surface area of the opening in the symbol defining layer as seen in Figure 1e. For each of the segments 2, 3, a center axis of said EC layer arranged behind said symbol defining layer substantially or fully coincides with a center axis of said opening in the symbol defining layer.

The EC-layer 160 comprises electrochromic and electrochemically active organic polymer material, and is arranged in ionic contact with said electrolyte layer. The carbon layer is arranged in physical contact with said EC-layer, preferably behind said EC-layer in the viewing direction of said display. Moreover, for each respective opening in the symbol defining layer, the spatial extension of the EC-layer is smaller than the spatial extension of the opening in the symbol defining layer, thereby leaving a rim portion 20', 20" of the opening in the symbol defining layer uncovered by the EC layer, which rim portion partly or fully surrounds said EC layer.

In more detail, the electrolyte layer 130 is ionically separated between adjacent switchable segments 2, 3, and the color change of said first electrode layer to show the symbol is indicated in Figure 1e as a change in the hatching of the first electrode layer 110.

With reference to Figures 1a-1e the directly addressable display is now described layer by layer. First a transparent substrate 105 is provided, and a first electrode layer 110 is arranged thereon. The first electrode layer is preferably continuous between different switchable segments, such that the first electrode layers in different switchable segments each is a separate portion of the continuous first electrode layer. Alternatively, the first electrode layer may be discontinuous between different switchable segments. In this case, each of the isolated first electrode layer is provided with a separate electrode for application of a potential.

Secondly, a symbol defining layer 120 is printed on the first electrode layer 110, which symbol defining layer 120 comprises openings or through holes 121-129, corresponding to the shape of the symbols that are to be displayed.

Thirdly, an electrolyte layer 130 is printed on top of the symbol defining layer 120. The electrolyte layer comprises nine portions 131-139 which are ionically isolated from each other such that the electric field in one electrolyte 131 does not influence the electric field in another electrolyte 132 in an adjacent switchable segment, or at least does not influence the electric field of an adjacent switchable segment to any significant extent; one portion for each switchable segment. Each portion of electrolyte 131-139 is printed such that it fills, covers and extends to the side of the respective opening(s) 121-129 in the symbol defining layer 120. The printed symbol defining layer may have any shape, as long as the electrolyte portions are ionically isolated from each other. Preferably the electrolyte layer is only in direct ionic contact with the first electrode layer 110 at portions where a colour switch of the electrochromic material is desired.

The symbol defining layer is arranged of ion isolative/insulating material, and advantageously the adhesion between the symbol defining layer 120 and the first electrode layer 110 is verified, such that a migration and/or diffusion of electrolyte in between the symbol defining layer and the first electrode layer is prevented or minimized. A migration of the electrolyte may deteriorate the contrast of the displayed image.

Fourthly, an EC-layer 160 is printed on top of the electrolyte layer 130. The EC-layer comprises nine portions 161-169 which are electronically isolated from each other. Each EC-layer portion, or EC-segment, 161-169 is arranged such that it is in ionic contact with a respective one of the electrolyte portions 131-139. The carbon electrode layer 140 is printed on top of the EC-layer 160. The carbon electrode layer comprises nine portions 141-149 which are electronically isolated from each other such that a potential applied to one electrode 141 do not influence the electric field in an electrolyte 132 belonging to an adjacent switchable segment. Each carbon electrode portion 141-149 is printed such that it is in electronic contact with a respective one of the EC-layer portions 161-169 and so that it preferably extends behind the symbol defining layer to the side of a respective opening in the symbol defining layer.

The carbon electrode portions may have any shape, is preferably arranged behind the EC-layer and may fully or partly cover the EC segment. According to one example, the carbon electrode portion may be formed as a line or stripe and extends from the EC-layer across the uncovered rim portion to the side of the opening of the symbol defining layer. According to another example, the carbon electrode portion partly or fully covers the EC-layer portion and comprises a protrusion that is formed as a line or stripe and extends from the EC-layer across the uncovered rim portion to the side of the opening of the symbol defining layer.

Advantageously, one or more first addressing electrodes 150 are provided in direct electronic contact with the first electrode layer for supplying a potential to the first electrode layer of the switchable segments. In case the first electrode layer comprises ionically isolated portions, each one of these portions are provided with a respective first addressing electrode. In case the first electrode layer instead is continuous, it may be sufficient to arrange one first addressing electrode in electronic contact with only one portion of the first electrode layer. Alternatively, the first addressing electrode may be provided such that the area, where the first addressing electrode and the first electrode layer is in direct electronic contact, extends across or encircles a portion of the first electrode layer.

As illustrated in Figure 1c the first addressing electrode may extend along the first electrode layer at a substantially equal distance from each switchable segment.

In the example illustrated in Figure 1a-d the switchable segments are arranged side by side along a first direction, which is orthogonal to the viewing direction. Further, the first electrode layer comprises a first portion 111 which is not covered by said symbol defining layer and which first portion extends in said first direction at a substantially equal distance from the opening in the symbol defining layer 121-129. Furthermore, the first addressing electrode 150 is arranged in direct electronic contact with said first portion 111 of the first electrode layer along the row of switchable segments. In order to facilitate the connection of the addressing electrode to a voltage source, the contact portions of the first addressing electrode are aligned with the contact portions of the counter electrodes. At those portions where the first addressing electrode extends closer to one of the switchable segments, the symbol defining layer is arranged such that it extends between that portion of the first addressing electrode and the first electrode layer. According to this example the first addressing electrode is printed at the same time as the carbon electrode layer.

Optionally, a protective layer 170 is provided on top of the electrode layer to protect and/or encapsulate the display.

Optionally, the colour of the symbol defining layer is the same or substantially the same as the colour of the electrolyte. This is advantageous as it improves the concealing of the symbols to be displayed in the off state of the display.

In operation a switchable segment is switched from its off state to its on state by applying a potential difference V_{PIXEL} across the electrolyte of the corresponding switchable segment. The potential difference causes an electrochemical reaction of a volume of the first electrode layer 110, which electrochemical reaction causes a colour change of the first electrode layer volume. The electrochemical reaction is initiated in the interface between the electrolyte and the first electrode layer, and thereafter propagates within the first electrode layer to the opposite side of the first electrode layer - such that the reaction is visible through the transparent substrate.

In a switchable segment having a first electrode layer comprising a cathodically coloring electrochromic material (e.g. PEDOT:PSS), a lower potential is preferably applied to the first electrode layer compared to the counter electrode. When the potential is applied, all charge carriers or at least all moveable charge carriers within the electrolyte will move towards the first electrode layer or towards the counter electrode layer, respectively, the direction being determined by their respective charge. According to one embodiment, in which a polycationic electrolyte is used, the larger ioncomplexes are to be attracted towards the electrochromic material, as the diffusion/migration of these charge carriers inside the electrochromic material may then be restricted.

According to one embodiment each portion of the counter electrode layer is provided with the same or substantially the same potential when a switchable segment is to be switched, in order to facilitate the control of the device. Alternatively, different potentials may be applied to different portions of the counter electrode layer, so as to enable a time differentiated switching of different switchable segments, i.e. that one switchable segment may be switched at a different rate compared to e.g. an adjacent switchable segment. The higher the applied potential difference, the faster the switchable segment switches.

When the display device illustrated in Figures 1a-d is turned on, or arranged in its on state, a ground potential is applied to the first addressing electrode 150 as well as to each one of the carbon electrode portions 142-149 except the leftmost carbon layer portion 141, to which a higher potential is applied. In response to the applied potential difference *V_{PIXEL}* across the first switchable segment, the symbol 'PIN' becomes visible in the first switchable segment, due to the electrochromic material being reduced. For each PIN entry, a potential difference *V_{PIXEL}* is applied to the counter electrode layer portion of the leftmost not yet activated switchable segment. In other words, for each PIN entry, another star symbol becomes visible from left to right in the display window. When six PIN entries have been made, the PIN code is verified by processing means and if it is correct a potential difference *V_{PIXEL}* is applied to the rightmost portion 149 of the counter electrode layer, and the symbol 'OK' becomes visible on the display. If the code is incorrect, a potential difference *V_{PIXEL}* is applied to the second rightmost portion 148 of the counter electrode layer, and the symbol '?' becomes visible on the display.

Dependent on the composition of the first electrode layer the applied potential *V_{PIXEL}* is selected such that the colour change is achieved either by oxidising or reducing the first electrode layer; i.e. the potential applied to the carbon electrode 140 is either higher or lower than the potential applied to the first electrode layer.

### Experiments

### Manufacturing process

The below examples were all manufactured by means of screen printing, using a screen printing mesh having 120 threads/cm, and a thread diameter of 34 µm, and in the below described order, unless stated otherwise. An insulating layer 105, comprising 125 µm thick polyethylene terephthalate (called PET hereinafter) film (Polifoil Bias manufactured by Policrom Screen) was provided and served as the substrate, onto which PEDOT:PSS (Clevios SV4 screen printing paste provided by Heraeus) was uniformly printed in order to form the first electrode layer 110. The SV4 ink was thermally cured.

A symbol defining layer 120 (e.g. UV curable dielectric 5018A purchased from DuPont, Uviplast UV curing ink Omniplus UL-025 from Fujifilm Sericol, Ultragraph UVAR from Marabu Printing Inks) having holes defining the images was then printed on top of the first electrode layer. Additionally, a portion 111 of the first electrode layer was left free from the symbol defining layer. The thickness of the layer was about 10-20 µm. The symbol defining layer was cured upon exposure to UV light.

Each opening in the symbol defining layer was assigned to a respective switchable segment, and an electrolyte layer portion 131-139 was printed on top of all openings in the symbol defining layer belonging to the respective same switchable segment, ensuring that the openings in the symbol defining layer were filled with electrolyte, that an electrolyte layer portion belonging to a first switchable segment was not in direct contact with an electrolyte layer portion belonging to a different switchable segment, and that no electrolyte was in ionic contact with the first electrode layer outside the openings of the symbol defining layer. The thickness of the electrolyte layer was about 5-10 µm. Thereafter the electrolyte layer was UV-cured, whereupon another electrolyte layer was printed having the same thickness. This final layer was also UV-cured. The electrolyte layer comprises Luviquat Excellence, a copolymer of vinylpyrrolidone and quaternised vinylimidazole in aqueous solution manufactured by BASF, including 10 wt.-% of TiO2 powder (Kronos 2300 manufactured by KRONOS), in order to make the electrolyte white and opaque.

An EC-layer 161-169 of PEDOT:PSS (Clevios SV4 screen printing paste provided by Heraeus) was printed on the electrolyte layer on top of the openings in the symbol defining layer. The shape of the respective EC-layer is the same as that of the respective opening in the symbol defining layer, but smaller. The centre axis of the EC-layer coincides with the centre axis of the opening in the symbol defining layer, thus there is an outer area or rim portion 20', 20" of the opening in the symbol defining layer that is not covered by the EC-layer as seen in the viewing direction of the display. The SV4 ink was thermally cured.

A carbon electrode portions 141-149 (electrically conducting carbon paste 7102 purchased from DuPont) was then screen printed on top of each of the EC-layer portions 161-169, ensuring that a carbon electrode portion belonging to a first switchable segment was not in direct contact with a carbon electrode portion belonging to a different switchable segment, and that no portion of the carbon electrode layer 140 is in direct electronic contact with the first electrode layer outside the openings of the symbol defining layer. The thickness of the layer was about 5-20 µm.

A first addressing electrode 150 (electrically conducting carbon paste 7102 purchased from DuPont) was then screen printed on top of and in direct physical contact with a portion of the first electrode layer not covered by the symbol defining layer. The portion of the first electrode layer not covered by the symbol defining layer extends along the 'K' of the switchable segment displaying 'OK'. Further, the first addressing electrode extends to the side of the left most and right most electrolyte portion 131,139, and ends in alignment with the ends of the carbon electrodes 141-149. Thereafter the carbon electrode layer 140 and the first addressing electrode 150 were dried at 120 °C for 3 minutes.

One conducting line was connected to each carbon electrode, and one conducting line to each end of the first addressing electrode. Finally, the conducting lines were connected to a voltage supply, capable of controlling the electric potential distributed to the first addressing electrode, and each carbon electrode individually. The applied potential difference across the switchable segment was lowered to 1.5 V, instead of an applied potential difference of 3 V that was used in a previous patent application (WO 2013/068185), unless stated otherwise.

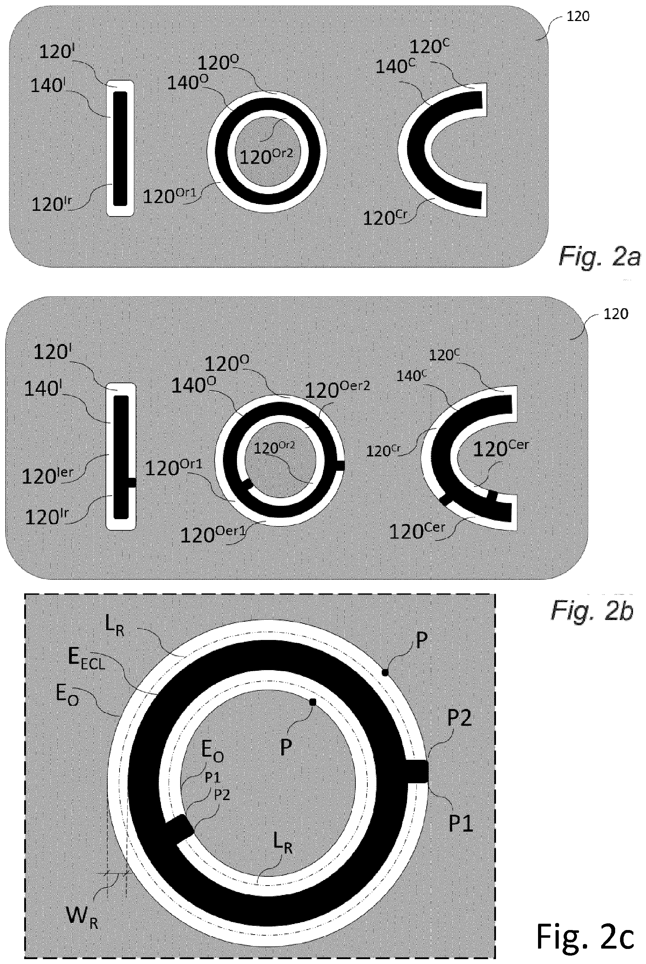

The rim portion is now discussed in more detail with reference to Figure 2a-2c. In Figure 2a there is shown a symbol defining layer 120 having three openings 120^{I}, 120^{O}, 120^{C}, and the Figure shows the front side of the symbol defining layer, i.e. the side facing the viewer. Three EC-layers 140^{I}, 140°, 140^{C} are arranged behind the symbol defining layer, and is seen in a respective one of the three openings 120^{I}, 120°, 120^{C}. Each one of the EC-layers 140^{I}, 140°, 140^{C} has a surface area that is smaller than the surface area of the respective opening 120^{I}, 120°, 120^{C} behind which it is arranged, and each EC-layer 140^{I}, 140^{O}, 140^{C} is arranged such that it does not cover a rim portion of the respective opening in the symbol defining layer. In Figure 2a the rim portions 120^{Ir}, 120^{Or1}, 120^{Or2},120^{Cr} and the uncovered rim portion have the same extension and coincide with the white areas between the symbol defining layer 120 and the EC-layers. The two outer openings 120^{I}, 120^{C} have one rim portion each 120^{Ir}, 120^{Cr}, while the middle opening 120° has one outer rim portion 120^{Or1} and one inner rim portion 120^{Or2}. As shown in Figure 2a, each of the EC-layers 140^{I}, 140°, 140^{C} may optionally have the same or a similar shape as the respective opening in the symbol defining layer 120^{I}, 120°, 120^{C}. All uncovered rim portions are continuous.

Figure 2b shows the same arrangement as described in relation to Figure 2a, except that each EC-layer 140^{I}, 140°, 140^{C} comprises at least one protrusion that extends continuously from a mid line of the opening 120^{I}, 120°, 120^{C} to the edge of the respective opening in the symbol defining layer. The rim portions of these openings 120^{Ir}, 120^{Or1}, 120^{Or2},120^{Cr} have exactly the same extension as those discussed in relation to Figure 2a and run along the respective edge of the opening in the symbol defining layer; while the uncovered rim portion 120^{Ier}, 120^{Oer1}, 120^{Oer2},120^{Cer} of the respective openings 120^{I}, 120°, 120^{C} coincides with the part of the rim portions 120^{Ir}, 120^{Or1}, 120^{Or2},120^{Cr} not covered by the EC-layer as seen in the viewing direction of the display. All uncovered rim portions 120^{Ier}, 120^{Oer1}, 120^{Oer2},120^{Cer} are seen as discontinuous as they do not fully coincide the rim portion 120^{Ir}, 120^{Or1}, 120^{Or2},120^{Cr} of the opening of the symbol defining layer due to the at least one protrusion of the respective EC-layer.

Figure 2c is an enlargement of the middle opening 120° and EC-layer 140° shown in Figure 2b, which is used to explain the meaning of the terms *width* and *length.* The uncovered outer rim portion has a *width* W_{R}, which is taken in a direction orthogonal to both the tangent of the edge of the opening as well as the viewing direction of the display. The length of the rim portion L_{R} is the path-length at the respective edge of the opening Eo, from e.g. P to P. In the figure the path-length is marked at W/2 instead of at the edge Eo to facilitate the reading. The length of the uncovered rim portion is the path length at the edge of the opening along the portion(s) that are not covered by the EC-layer, i.e. from P1 to P2 in the clock-wise direction.

For symbols that enclose an area, such as for example an "O" or a "P", there are two or more rim portions. The length of the uncovered rim portion is preferably at least 80 % or at least 90 % or at least 100 % of the length of the rim portion, i.e. of the path around the symbol at the rim of the opening of the respective symbol defining layer.

Rim portions can be continuous or discontinuous. When the rim portion is continuous it extends along the periphery of the symbol defining layer without interruptions, as seen in figure 2a, and when it is discontinuous it extends around the periphery with one or more interruptions, as illustrated in figure 2b. In the case of a discontinuous rim portion, the EC layer extends to or over the opening in the symbol defining layer at one or more points.

Figures 3a to 3f show examples of layers which may be used when forming a 2.5 digit (`188') display device according to the invention. The first electrode layer 310 is illustrated in Figure 3a, the symbol defining layer 320 is illustrated in Figure 3b, the electrolyte layer 330 and the EC-layer 360 are illustrated in Figure 3c, the carbon electrode layer 340 is illustrated in Figure 3d; and the carbon electrode layer 340 as well as the first addressing electrode 173 and the set of second addressing electrodes 172 are illustrated in Figure 3f. Figure 3d shows the shape of the carbon layer, where the surface areas of the carbon electrodes are larger than the openings in the symbol defining layer. The purpose of the protrusions, e.g. 181, is to facilitate the connection of the carbon electrodes to the addressing electrodes 172 shown in figure 3e, which are silver leads in this embodiment, and which enable a connection of the carbon electrodes to an external addressing circuit.

By applying a e.g. ground potential to the first electrode layer and a more positive or negative voltage to one of the electrodes in said set of second addressing electrodes, a respective segment in the display may be switched. In Figure 3e the elongated protrusions in the silver leads extend in the same spatial plane as the carbon electrodes in this embodiment.

For each segment, the carbon electrode layer covers an area of the EC-layer, which area is e.g. within the range of between 25% to 100% of the surface area of the EC-layer. Optionally, a part of the carbon electrode layer, e.g. an elongated protrusion, may extend to the side of the EC-layer and cover a part of the rim portion and or the symbol defining layer. Preferably, the carbon electrode layer partly or fully covers said rim portion of the opening in the symbol defining layer and is thereby in direct physical contact with said electrolyte layer.

### Importance of the rim portion

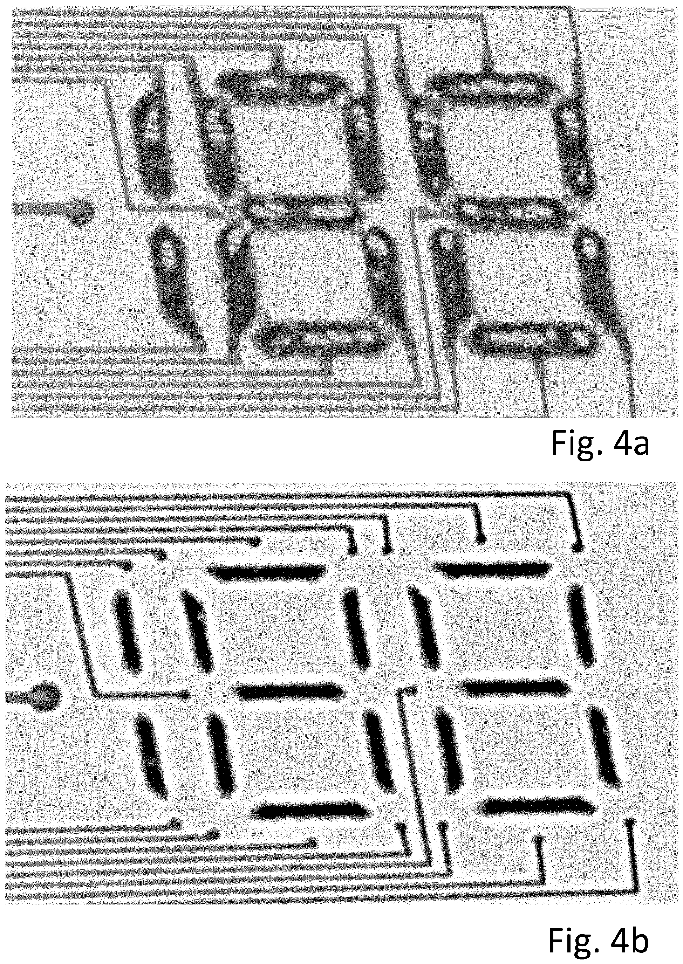

The appearance of the printed EC-layer after switching is illustrated in the photographs shown in Figure 4a and 4b, the photographs are taken with the EC layer as the most upper layer in a direction opposite to the viewing direction of the display. Figure 4a shows the appearance of the EC layer in a display without a rim portion, i.e. the area of the EC-layer is at least as large as the area of the opening in the symbol defining layer. As seen there is a severe smearing of the EC-layer. The smearing of the EC-layer results in electronic short-circuits between neighbouring display segments, which in turn would result in severe cross-talk upon electronically addressing such display device. Even though the intention might be to switch only one unique display segment, the neighbouring display segments would also change colour due to the electronic short-circuits caused by the smeared EC-layer.

Figure 4b shows a design in which the area of the printed EC-layer is smaller than the area of the opening in the symbol defining layer, such that a rim portion between the edge of the EC-layer and the edge of the opening of the symbol defining layer is created. This results in a printed EC-layer with a more uniform thickness and coverage on top of the electrolyte, and no smearing effect at all. The improved properties (e.g. more uniform thickness and coverage) of the deposited EC-layer significantly reduces or fully removes the electronic short-circuits between the counter electrodes of neighbouring display segments, and hence, no cross-talk effects between neighbouring display segments upon electronically addressing the display device. Note that none of the displays shown in Figure 4a and 4b have been completed, since the carbon electrode layer is missing in both devices.

### More details about the electrolyte

The electrolyte e.g. a polyelectrolyte has the property to provide ions and ion mobility sufficient for the composition to function as an electrolyte in an electrochemical cell. The polyelectrolyte provides mobile counter ions and the whole composition provides mobility for ions to provide for electrolytic connectivity between the electrochromic material and the counter electrode sandwiching the electrolyte. This means that the ion transporting paths in the electrolyte should be sufficient to provide ion transport for the electrochemical switches in the electrodes.

The polyelectrolyte can e.g. be selected amongst polycationic materials, like cationic polymers, preferably polymers having quaternized ammonium groups. Examples of polyelectrolytes being cationic polymers are poly[(3-methyl-1-vinylimidazolium chloride)-co-(1-vinylpyrrolidone)] and poly(diallyldimethylammonium chloride).

Further, the poly[(3-methyl-1-vinylimidazolium chloride)-co-(1-vinylpyrrolidone)] is available as 'Luviquat Excellence^{™}' which is a solution comprising 40 wt% of poly[(3-methyl-1-vinylimidazolium chloride)-co-(1-vinylpyrrolidone)] in water. The poly[(3-methyl-1-vinylimidazolium chloride)-co-(1-vinylpyrrolidone)] is a copolymer having 95 mole % 3-methyl-1-imidazolium chloride repeating units and 5 mole % vinylpyrrolidone units. The product is available from BASF GmbH.

The poly(diallyldimethylammonium chloride) is typically used as a water solution comprising 35 wt. % poly(diallyldimethylammonium chloride). The polycationic polyelectrolyte is available from Sigma Aldrich.

The electrolyte composition of the invention may also comprise further components, like for example surface active agents, lubricants, process stabilizers.

In relation to this invention the choice of electrolyte is of less importance, and can be made within a wide range of electrolytes, where polycationic electrolytes is only one example of a suitable electrolyte. A polyanionic electrolyte, such as PSS poly(styrenesulfonate) may also be used. Some polyanionic electrolyte may cause lateral migration, and thereby less sharp images, which could be hidden by one or more printed graphic layers hiding such effects.

### The substrate

The electrochemical cell may be placed and applied upon a substrate. The substrate may be selected from substrate of plastic material, of any fibrous material, of textile, or paper. The substrate shall be suitable for the printing method selected.

### More details and examples about the electrolyte

In this section, example electrolyte compositions are described. It should be noted that other electrolytes than these described here may be used according to the invention. The electrolytes described here are a result from the efforts to find an electrolyte with good printing properties.

Thus, preferably the electrochemical composition is printable, and in general it is advantageous to provide a printable electrochemical device by printing an electrolyte on top of a first electrode, for example the first electrode layer or the counter electrode layer, and to print a second electrode, for example the counter electrode layer or the first electrode layer, on top of the electrolyte. Suitable electrolytes for such an application shall fulfill some requirements, they shall be printable and they shall be over-printable. These properties are in addition to their basic function on having the ability to function as an electrolyte in the device.

It is desirable that the device can be printed on a flexible substrate, for example a porous or fibrous substrate such as paper, and that it can function in a range of environmental conditions without the need for encapsulation. The condition that the device should be printable on fibrous and porous substrates challenge the mobility of the electrolyte at the same time as a minimum mobility is essential for the function of the electrolyte.

The most common group of printable electrolytes consists of either an ionic liquid in a binder system, such as in WO 2008062149 A1, or a salt dissolved in a solvent in a binder system. However, these systems comprise ions that can migrate from the place of print deposition, especially if the substrate is porous, leading to ion depletion in the printed area and contamination of other components. On the other hand, a certain degree of mobility is required for the function of the electrolyte. It is desirable that the electrolyte salt can migrate at least to some extent through the film thickness of the electrode layers between which it is sandwiched.

It has been found that an electrolyte based on polycations provide an acceptable degree of mobility in printed structures, so that ion transport between electrolyte and electrode is sufficient, while migration of the polycations on fibrous substrates is acceptably low. For more details and examples of electrolytes based on polycations or polyelectrolytes reference is made to WO 2013/068185.

Structural integrity of the cell requires adhesion between electrodes and electrolyte, as well as between electrode and electrolyte to the substrate.

Further, printing a second electrode over an electrolyte covering the first electrode requires that adhesion is obtained between the electrolyte and the first electrode, otherwise tension when the screen is lifted may cause delamination. Otherwise, the electrochemical cell would be short circuited when the second electrode would be printed on top of the electrolyte, and reach the first electrode through the pin-holes or at the delaminated areas. Poor adhesion can lead to delamination or cracking of the film, which could reduce connectivity of the electrodes or lead to short circuits in the cracks. In addition, it should be possible to print a second electrode on top of the electrolyte. This means that the electrolyte should be stable to the effects of the solvents used in print deposition of the second electrode. Otherwise, the electrolyte layer would swell and wrinkle with poor connectivity of the second electrode as consequence.

Further, the electrolyte components supporting the conductivity must be sufficiently immobilized. Otherwise, they may migrate throughout the structure with device performance degradation, or even malfunction, as a consequence. If the electrolyte itself migrates, the electrolyte may be depleted inside the cell, but it can also lead to contamination in other parts of the device and shall be avoided.

Further, other components in the composition could migrate, leading to openings in the electrolyte layer that may result in ohmic contacts, or short circuits, between the electrodes.

### Dispersing medium

The electrolyte composition when in form of a colloid may comprise a dispersing medium, thus a liquid. Depending on the components included in the electrolyte composition, the liquid may be selected from water or solvents, or mixture thereof. Typically, the liquid is aqueous liquids, for example water, or water mixed with lower alcohols, for example ethanol.

### The electrode

The electrode may be applied upon the substrate, is herein denoted as the 'first electrode layer', and upon the electrolyte, herein denoted the 'counter electrode layer'; the latter comprising an EC-layer and a carbon electrode layer. An example of a printable electrode material that can be used to build electrochemical cells with the printable electrolyte composition is Clevios S V3 ^{™}, a screen printable electrochromic material based on poly(3,4-ethylenedioxythiophene) poly(styrenesulfonate) (PEDOT:PSS) (provided by Heraeus). This formulation may be used for both the first electrode layer and the EC-layer. Other PEDOT:PSS formulations may serve as the material for the first electrode layer and/or the EC-layer, such as Clevios S V4 (provided by Heraeus) or the screen printing PEDOT:PSS formulations EL-P3145, EL-P3155, EL-P3165 and EL-P5015 (provided by AGFA). A carbon based printable conductor (e.g. DuPont 7102, provided by DuPont) may serve as the carbon electrode layer.

The electrolyte may be printed using a range of printing methods including flexo, screen, offset and gravure printing. Screen printing is particularly preferred.

### EXAMPLES

### Example 1.

### Binder solution

A solution was prepared by dissolving 1 g Irgacure 2959, 0.8 g Lucerin-TPO in 14 g polyethyleneglycol diacrylate 700, all ingredients purchased from Sigma-Aldrich, under heat and absence of light. The solution was cooled to ambient temperature.

### Example 2.

A printable polyelectrolyte based on poly[(3-methyl-1-vinylimidazolium chloride)-co-(1-vinylpyrrolidone)] (Luviquat Excellence) 120 g titanium dioxide, Kronos 2300, (median particle size 0.36 µm) purchased from Kronos AS, Norway, is dispersed for 20 minutes in 130 g of a 40% aqueous solution of Luviquat Excellence, purchased from BASF GmbH, Germany, with the aid of 28 g deionized water using a Yellow Line Laboratory mixer from ATP Engineering B. V., equipped with a 70 mm rotor-stator high shear inline mixer. The binder solution prepared according to example 1 was added. Subsequently 12 g poly(ethyleneglycol-ran-propyleneglycol), and 24 g of DL-lactic acid, both purchased from Sigma-Aldrich were added. The mixture was homogenized using the inline shearing mixer for 10 minutes.

### Example 3.

### A printable polyelectrolyte based on poly(diallyldimethylammonium chloride), (PDADMA-CI)

120 g titanium dioxide, Kronos 2300, was dispersed for 20 minutes in 130 g of a 35% aqueous solution PDADMA-CI, (labeled 'very low molecular weight' Mw<100 000 g/mol), purchased from Sigma-Aldrich using the mixing equipment as described in example 2. The binder solution prepared according to example 1 was added. Subsequently 12 g poly(ethyleneglycolran-propyleneglycol) and 24 g DL-lactic acid were added. The mixture was homogenized using the inline shearing mixer for 15 minutes.

### Example 4.

### A printable polyelectrolyte composition with an amine synergist

120 g titanium dioxide Kronos 2300 is dispersed for 20 minutes in 130 g of Luviquat Excellence with the aid of 28 g deionized water using the in-line high shear mixer. The binder solution prepared in example 1 was added. Subsequently 12 g poly(ethyleneglycol-ran-propyleneglycol), 24 g lactic acid and 3,5 g of an amine synergist, Sartomer CN 3755, purchased from Sartomer SA were added to inhibit oxygen termination during curing with ultraviolet initation and irradiation. The mixture was homogenized with the inline shearing mixer for 10 minutes.

### Example 5.

### A printable polyelectrolyte based on poly[(3-methyl-1-vinylimidazolium chloride)-co-(1-vinylpyrrolidone)] (Luviquat Excellence) and lecithine.

A binder solution was prepared according to the procedure in example 1, from 6.98 g Irgacure 2959, 4.95 g Lucerin-TPO in 79.81 g polyethyleneglycol diacrylate 700. To this binder solution was added 750.3 g of a 40% aqueous solution of Luviquat Excellence, followed by mixing using a Yellow Line Laboratory mixer from ATP Engineering B. V., equipped with a 70 mm rotor-stator high shear inline mixer. To 82.33 g of the mixture was 6.35 g poly(ethyleneglycol) 400 added. The mixture was homogenized using the inline shearing mixer for 10 minutes.

### Examples.

62,1 g of the electrolyte composition described in example 2 is mixed with 1,0 g of pentaerytritol tetrakis(3-mercapto propionate).

### Example 7.

Printing of electrochromic test structures using the electrolyte composition in Example 2. A first electrode pattern of PEDOT:PSS, Clevios SV-3, purchased from Clevios GmbH, was screen printed on a transparent plastic substrate using a 120-34 mesh web. Subsequently, the electrolyte pattern is printed, using the composition as in Example 2, and cured twice to give a double layer of the electrolyte described in Example 2. The electrolyte pattern is printed with a 120-34 mesh web and UV cured (Aktiprint T28-1 UV dryer with belt speed setting of 30% of maximum speed). The second electrode pattern is printed using 7102, a carbon based conducting ink purchased from DuPont, and thermally cured at 140 °C for three minutes. First, an electrochromic electrode pattern 1010 is printed on a transparent plastic substrate. Then the electrolyte layers are printed on a portion of the substrate 1040 and a portion of the electrochromic pattern 1010. (Provided a sufficient amount of white pigment is provided to the composition, it is non transparent white in the resulting device)). Finally, the second electrode pattern 1020 is printed on top of the electrolyte.

### Example 8.

Printing of electrochromic test structures using electrolyte ink in example 3. The procedure in example 5 is followed except that the electrolyte composition in Example 3 is used.

### Example 9.

Printing of electrochromic test structures using electrolyte ink in example 4. The procedure in example 7 is followed except that the electrolyte composition in example 4 is used.

### Example 10.

Testing of the printed electrochromic display pixel in example 5. A test pixel was cut out from the test-structure printed in example 5. The electrodes were connected to a voltage source so that the electrochromic PEDOT:PSS electrode was connected to the negative pole and the carbon electrode connected to the positive pole. After the voltage is applied, the current is plotted versus elapsed time. The electrochromic PEDOT:PSS pixel turns deep blue as it is reduced during the switch. The voltage used here was 3 V. In figure 9a it is shown a test pixel to be cut out from the test-structure depicted in figure 8a, and in figure 9c if is shown before switching (white). In figure 9d, the pixel can be seen after switching the pixel (shadowed) as described in example 10. In figure 10 the curve obtained when the current flowing through a test pixel is plotted against time after applying 3 V over the electrodes according to example 10. Ocularly, the pixel appears to be switched after circa one second.

### Example 11.

Testing of the printed electrochromic display pixel in example 8. A test pixel, as an electrochemical cell,was cut out from the test-structure printed in example 9 and tested as described in example 10. In figure 11 the curve obtained when the current flowing through a test pixel is plotted against time after applying 3V over the electrodes according to example 11. Ocularly, the pixel appears to be switched after circa one second.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular form or material to the teachings of the invention without departing from the essential scope thereof. Therefore, it is intended that the invention not be limited to the particular embodiments disclosed for carrying out the invention, but the invention will include all embodiments falling within the scope of the appended claims.

### Example A (without EC layer):

Printing of electrochromic test structures using the electrolyte composition in Example 2 above. A first electrode layer of PEDOT:PSS, Clevios SV-4, purchased from Clevios GmbH, was screen printed on a transparent plastic substrate (110) using a 120-34 mesh web. The size of the first electrode layer is approximately 2x3 cm. Subsequently, the symbol defining layer (e.g. UVSF173, provided by Marabu) is screen printed on top of the first electrode layer, followed by UV-curing, the diameter of the star shaped opening is approximately 2-3 mm. The electrolyte pattern (130) is printed in the next process step, using the composition as in Example 2. The electrolyte is printed twice to obtain a double layer, with a UV-curing step after each screen printing step. The electrolyte pattern is printed with a 120-34 mesh web and UV cured (Aktiprint T28-1 UV dryer with belt speed setting of 30% of maximum speed). Each electrolyte segment fully covers and extends between 100 - 300 µm to the side of the respective opening in the symbol defining layer. The carbon counter electrode layer is screen printed using 7102, a carbon based conducting ink purchased from DuPont, and thermally cured at 130 °C for three minutes. In this example, each carbon layer fully covers and extends between 10 - 100 µm to the side of the respective electrolyte segment. The resulting electrochromic display requires a relatively high voltage to obtain full coloration, typically 2 V or more.

### Example B (with EC layer, but without rim portion):

Printing of electrochromic test structures using the electrolyte composition in Example 2. A first electrode layer of PEDOT:PSS, Clevios SV-4, purchased from Clevios GmbH, was screen printed on a transparent plastic substrate (110) using a 120-34 mesh web. Subsequently, the symbol defining layer (e.g. UVSF173) is screen printed on top of the first electrode layer, followed by UV-curing. The electrolyte pattern (130) is printed in the next process step, using the composition as in Example 2. The electrolyte is printed twice to obtain a double layer, with a UV-curing step after each screen printing step. The electrolyte pattern is printed with a 120-34 mesh web and UV cured (Aktiprint T28-1 UV dryer with belt speed setting of 30% of maximum speed). The counter electrode layer comprises two different material, and its deposition is separated in two different screen printing steps. Firstly, the EC-layer is screen printed using Clevios S V4, followed by thermal curing at 130 °C for three minutes. Secondly, a carbon electrode layer is screen printed using 7102, a carbon based conducting ink purchased from DuPont, and thermally cured at 130 °C for three minutes. All the layers have the same spatial extention as those in Example A; and as for the EC layer each EC-segment fully covers and extends between 10-100 µm to the side of the respective electrolyte segment. The purpose of the carbon electrode layer is e.g. to 1) minimize the resistance of the counter electrode layer printed on top of the electrolyte and 2) to enable the connectivity with the set of second addressing electrodes. The switching voltage, to obtain full coloration, in the resulting electrochromic display is lowered to -1.5 V by the introduction of an EC-layer between the electrolyte and the carbon electrode layer. This display device is shown in Figure 4a.

### Example C (with EC-layer and rim portion):

Printing of electrochromic test structures using the electrolyte composition in Example 2. A first electrode layer of PEDOT:PSS, Clevios SV-4, purchased from Clevios GmbH, was screen printed on a transparent plastic substrate (110) using a 120-34 mesh web. Subsequently, the symbol defining layer (e.g. UVSF173) is screen printed on top of the first electrode layer, followed by UV-curing. The electrolyte pattern (130) is printed in the next process step, using the composition as in Example 2. The electrolyte is printed twice to obtain a double layer, with a UV-curing step after each screen printing step. The electrolyte pattern is printed with a 120-34 mesh web and UV cured (Aktiprint T28-1 UV dryer with belt speed setting of 30% of maximum speed). The counter electrode layer comprises two different material, and its deposition is separated in two different screen printing steps. Firstly, the EC-layer is screen printed using Clevios S V4, followed by thermal curing at 130 °C for three minutes. In this example, the spatial extension of the EC-layer is smaller than the spatial extension of the opening in the symbol defining layer, thereby creating a rim portion or an uncovered rim portion in accordance with Figure 2. Secondly, a carbon electrode layer is screen printed using 7102, a carbon based conducting ink purchased from DuPont, and thermally cured at 130 °C for three minutes. All the layers have the same spatial extention as those in Example A; except the EC-layer which provides a continuous uncovered rim portion having a width within the range of 100-300 µm along the circumference of the respective opening in the symbol defining layer. The purpose of the carbon electrode layer is to 1) minimize the resistance of the counter electrode layer printed on top of the electrolyte and 2) to enable the connectivity with the set of second addressing electrodes. The switching voltage, to obtain full coloration, in the resulting electrochromic display is lowered to -1.5 V by the introduction of an EC-layer between the electrolyte and the carbon electrode layer. This display device is shown in Figure 4b.

The above extensions of the respective layers are only to be seen as examples. An electrolyte segment may e.g. generally extend at least 50 µm and/or up to 500 µm or more outside the respective opening in the symbol defining layer, provided there is sufficient space to allow the electrolyte segments to be a electrically separated from each other.

The introduction of the rim portion and an EC-layer between the electrolyte and the carbon electrode layer results in a clearly lowered switching voltage, approximately 1.5 V is required to reach full coloration. From a practical perspective, this is an important feature since only one battery would be required upon integrating such a display into a larger electronic system, e.g. a printed sensor platform. The display exemplified in Example A would require two batteries, which would add cost and weight as well as that the resulting electronic system would be less flexible.

### New example E ("Comparing example B with example C"):

Display devices manufactured according to Example B and Example C both exhibit a low switching voltage of approximately 1.5 V. But nevertheless, there is yet an important difference between the display devices exemplified in Example B and Example C; the rim portion. A device manufactured according to Example B is shown in Figure 4a. By introducing an EC-layer having a spatial extension at least equal to the spatial extension of the opening of the symbol defining layer results in poor printability. This is evidenced by the photograph in Figure 4a, showing severe smearing of the printed PEDOT:PSS serving as the EC-layer. This, in turn, results in that the counter electrodes of neighbouring display segments are unintentionally brought into contact with each other, i.e. electrical short-circuits. Operation of such display, suffering from electrical short-circuits, would inevitably lead to cross-talk effects upon observing the display segments in the viewing direction of the display device.

Figure 4a and 4b show a photograph of a display device manufactured according to Example A and C, respectively, but without the carbon layer. Figure 4b shows a display including the rim portion by designing the spatial extension of the EC-layer smaller than the spatial extension of the opening of the symbol defining layer. This facilitates the printing of the EC-layer, and increases the manufacturing yield of the screen printed display devices. The EC-layer is deposited into a pattern with a much more uniform thickness, such that the lowered switching voltage still is obtained, but without the detrimental smearing effects of the PEDOT:PSS serving as the EC-layer. Hence, full color contrast is obtained at a lowered switching voltage in the display exemplified by Example C, and the manufacturing of these displays can be completed at very high manufacturing yield without any smearing of the EC-layer, which in turn prevents cross-talk effects upon display operation.

Figure 5 compares a display according to Example A to a display according to Example C. The graph with filled squares denote an electrochromic display design according to Example A. The graph with open squares denote an electrochromic display design according to Example C . The dashed lines show the obtained color contrast when the applied voltage equals 1.5 V. For the display according to Example A approximately 56 % of the total color contrast is achieved at 1.5 V; compared to approximately 91 % at 1.5 V for the display according to Example C. This is an important result that enables utilization of electrochromic displays in electronic systems having a power supply as low as 1.5 V, e.g. a single (printed) battery cell. Both display architectures are reaching the same total color contrast upon saturation; approximately a ΔE value of 30.

While the invention has been described with reference to a number of preferred embodiments, it will be understood by those skilled in the art that various changes may be made without departing from the scope of the invention. In addition, many modifications may be made to adapt a particular form or material to the teachings of the invention without departing from the essential scope thereof. Therefore, it is intended that the invention not be limited to the particular embodiments disclosed for carrying out the invention, but the invention will include all embodiments falling within the scope of the appended claims. It is further noted that, in the claims, the word "comprising" does not exclude other elements or steps, and the indefinite article "a" or "an" does not exclude a plurality. A single apparatus or other unit may fulfil the functions of several items recited in the claims. The mere fact that certain features or steps are recited in mutually different dependent claims does not indicate that a combination of these features or steps cannot be used to advantage.

## Claims

1. A directly addressable display (100), comprising at least one switchable segment which is repeatedly switchable between an on-state and an off-state, wherein each of said at least one switchable segment is configured to display at least one predetermined symbol in said on-state, further each switchable segment comprises a stack of layers, said stack of layers comprising:
- a first electrode layer (110) comprising electrochromic and electrochemically active organic polymer material being electrochemically switchable between two different visually detectable coloring states respectively corresponding to said on-state and said off-state of said switchable segment;
- a symbol defining layer (120) which is electronically and ionically insulating and comprises at least one opening (121), which at least one opening defines the shape of said at least one predetermined symbol, said symbol defining layer being arranged behind said first electrode layer in the viewing direction of said display,
- an electrolyte layer (130) arranged behind said first symbol defining layer in the viewing direction of said display, which electrolyte layer fills and covers the at least one opening of said symbol defining layer,
- a counter electrode which, in the viewing direction of said display, is arranged behind said electrolyte layer, said counter electrode comprises a carbon layer (140) and **characterized in that** the counter electrode further comprises an EC layer (160),
wherein said EC layer comprises electrochromic and electrochemically active organic polymer material, and is arranged in ionic contact with said electrolyte layer, and wherein said carbon layer is arranged in physical contact with said EC layer and preferably arranged behind said EC layer in the viewing direction of said display,
wherein for each of said at least one opening in the symbol defining layer, the spatial extension of the EC layer is smaller than the spatial extension of the opening in the symbol defining layer, leaving a rim portion (20) of the opening in the symbol defining layer uncovered by the EC layer, which uncovered rim portion partly or fully surrounds said EC layer and wherein said carbon layer extends behind the electrolyte layer preferably at least from the EC layer across the rim portion to the symbol defining layer.

2. The directly addressable display according to claim 1, wherein for each of said segments said uncovered rim portion is continuous or discontinuous, and partly surrounds said EC layer,
additionally or alternatively
the total length of each uncovered rim portion is between 60 % and 100 %, of the length of the circumference of the respective opening in the symbol defining layer.

3. The directly addressable display according to any one of the preceding claims, wherein for each of said segments the carbon layer is arranged behind the EC layer in the viewing direction of the display, and for each of said segments the carbon layer covers between 25% to 100% of the EC layer, and optionally the carbon layer partly or fully covers said uncovered rim portion of the opening in the symbol defining layer and is thereby in direct physical contact with said electrolyte layer.

4. The directly addressable display according to any one of the preceding claims, wherein for each of said segments the carbon layer covers at least 25%, or at least 50 % or at least 75 % or at least 90 % or at least 95 % or 100% of the symbol defining layer, or alternatively for each of said segments the carbon layer covers at most 25%, or at most 50 % or at most 75 % or at most 90 % of the symbol defining layer.

5. The directly addressable display according to any of the preceding claims, further comprising:
- at least one first addressing electrode (173) arranged in electronic contact with said first electrode layer, and
- a set of second addressing electrodes (172), wherein each of said second addressing electrodes is arranged in electronic contact with a respective one of said carbon layers, and
wherein each one of said first and second addressing electrode(s) are connectable to an addressing device (64) configured to provide a variable potential difference between the second addressing electrode(s) of said at least one switchable segment and said at least one first addressing electrode to switch the color of said first electrode layer.

6. The directly addressable display according to anyone of the preceding claims, wherein said directly addressable display comprises at least two switchable segments or at least seven switchable segments, and wherein the electrolyte layer of one switchable segment is ionically isolated from the other electrolyte layer(s) of the other switchable segment(s).

7. The directly addressable display according to any of the preceding claims, wherein, for each segment and for each of said at least one opening in the symbol defining layer, the EC layer and the opening have a respective center axis and a center axis of said EC layer arranged behind said symbol defining layer substantially or fully coincides with a center axis of said opening in the symbol defining layer.

8. The directly addressable display according to any of the preceding claims, wherein the width of said uncovered rim portion is within the range of 10 to 900 µm, preferably within the range of 50 to 500 µm.

9. The directly addressable display according to any of the preceding claims, wherein the color of the electrolyte layer and the color of the symbol defining layer are substantially the same.

10. The directly addressable display according to any of the preceding claims, further comprising a substrate whereon said at least one switchable segment is arranged, wherein said substrate preferably is flexible.

11. The directly addressable display according to any of the preceding claims, wherein said switchable segment is free of any electronic conductor in addition to the first electrode layer arranged in front of said at least one opening in the symbol defining layer and in front of said first electrode layer as seen in the viewing direction of said directly addressable display.

12. A method of manufacturing a directly addressable display comprising at least one switchable segment which is repeatedly switchable between an on-state and an off-state, wherein each of said at least one switchable segment is configured to display at least one predetermined symbol in said on-state, said method comprises:
- providing a continuous or discontinuous first electrode layer (110) comprising electrochromic and electrochemically active organic polymer material being electrochemically switchable between two different visually detectable coloring states;
- fully or partly cover said first electrode layer by a symbol defining layer (120), which symbol defining layer is electronically and ionically insulating and comprises at least one opening (121) for each one of said at least one segments, which at least one opening defines the shape of the at least one predetermined symbol of a respective one of said at least one switchable segment, and wherein each of said at least one opening exposes a respective surface portion of said first electrode layer,
- providing an electrolyte layer (130) which comprises at least one electrolyte layer portion (131), wherein each one of said electrolyte layer portions are spatially separated from each other and each one of said electrolyte layer portions fully covers a respective one of said opening(s) (121) in the symbol defining layer,
- providing an EC layer (160) which comprises at least one EC layer portion (161), wherein each one of said EC layer portion(s) are spatially separated from each other and each one of said EC layer portions are in direct contact with a respective one of said electrolyte layer portions and partly covers a respective one of said at least one openings (121) while leaving a rim portion (20) of said at least one opening uncovered;
- providing a carbon layer (140) which comprises at least one carbon layer portion (141), wherein each one of said carbon layer portions are spatially separated from each other, and each one of said carbon layer portions is in electronic contact with a respective one of said EC layer portions (161), and wherein said carbon layer (140) extends from the EC layer across the rim portion to the symbol defining layer.

13. A method of manufacturing a directly addressable display according to claim 12, wherein each one of said carbon layer portions covers between 25% and 100% of the respective EC layer portion, wherein for each switchable segment said step of providing the EC layer comprises providing the EC layer portion such that its coverage is preferably confined within the respective opening in the symbol defining layer, and wherein optionally each one of said carbon layer portions partly or fully covers said uncovered rim portion (20) of a respective opening (121) in the symbol defining layer and is thereby in direct physical contact with each one of said electrolyte layer portions (131).

14. A method of manufacturing a directly addressable display according to any one of claims 12-13, further comprising the steps of:
- providing at least one first addressing electrode (151;173), in electronic contact with said first electrode layer;
- providing at least a set of second addressing electrodes (172),
wherein each second addressing electrode in said set of second addressing electrodes is in electronic contact with a respective one of said at least one carbon layer portion (141).

15. A method of manufacturing a directly addressable display according to any one of claims 12-14, wherein said step of providing an EC layer comprises leaving a rim portion having a width of at least 10 µm, or at least 30 µm, or at least 50 µm, or at least 70 µm, or at least 85 µm, or at least 95 µm,
additionally or alternatively
said step of providing an EC layer comprises leaving a rim portion having a width of at most 900 µm, or at most 500 µm, or at most 300 µm, or at most 200 µm, or at most 150 µm.

## Patentansprüche

1. Direkt adressierbare Anzeige (100), umfassend mindestens ein umschaltbares Segment, welches wiederholt zwischen einem Ein-Zustand und einem Aus-Zustand umschaltbar ist, wobei jedes des mindestens einen umschaltbaren Segments so konfiguriert ist, dass es in dem Ein-Zustand mindestens ein vorbestimmtes Symbol anzeigt, wobei ferner jedes umschaltbare Segment einen Stapel von Schichten umfasst, wobei der Stapel von Schichten umfasst:
- eine erste Elektrodenschicht (110), umfassend elektrochromes und elektrochemisch aktives organisches Polymermaterial, welches elektrochemisch zwischen zwei verschiedenen visuell erfassbaren Färbungszuständen umschaltbar ist, die dem Ein-Zustand bzw. dem Aus-Zustand des umschaltbaren Segments entsprechen;
- eine Symboldefinitionsschicht (120), welche elektronisch und ionisch isolierend ist und mindestens eine Öffnung (121) umfasst, wobei die mindestens eine Öffnung die Form des mindestens einen vorbestimmten Symbols definiert, wobei die Symboldefinitionsschicht in der Blickrichtung der Anzeige hinter der ersten Elektrodenschicht angeordnet ist,
- eine Elektrolytschicht (130), welche in der Blickrichtung der Anzeige hinter der ersten Symboldefinitionsschicht angeordnet ist, wobei die Elektrolytschicht die mindestens eine Öffnung der Symboldefinitionsschicht füllt und abdeckt,
- eine Gegenelektrode, welche in der Blickrichtung der Anzeige hinter der Elektrolytschicht angeordnet ist, wobei die Gegenelektrode eine Kohlenstoffschicht (140) umfasst,
und **dadurch gekennzeichnet, dass** die Gegenelektrode ferner eine EC-Schicht (160) umfasst, wobei die EC-Schicht elektrochromes und elektrochemisch aktives organisches Polymermaterial umfasst und in ionischem Kontakt mit der Elektrolytschicht angeordnet ist, und wobei die Kohlenstoffschicht in physischem Kontakt mit der EC-Schicht angeordnet ist und vorzugsweise in der Blickrichtung der Anzeige hinter der EC-Schicht angeordnet ist,
wobei für jede der mindestens einen Öffnung in der Symboldefinitionsschicht die räumliche Ausdehnung der EC-Schicht geringer ist als die räumliche Ausdehnung der Öffnung in der Symboldefinitionsschicht, wodurch ein Randabschnitt (20) der Öffnung in der Symboldefinitionsschicht von der EC-Schicht unbedeckt bleibt, wobei der unbedeckte Randabschnitt die EC-Schicht teilweise oder vollständig umgibt und wobei sich die Kohlenstoffschicht hinter der Elektrolytschicht erstreckt, vorzugsweise zumindest von der EC-Schicht über den Randabschnitt bis zu der Symboldefinitionsschicht.

2. Direkt adressierbare Anzeige nach Anspruch 1, wobei der unbedeckte Randabschnitt für jedes der Segmente kontinuierlich oder diskontinuierlich ist und die EC-Schicht teilweise umgibt,
zusätzlich oder alternativ
die Gesamtlänge jedes unbedeckten Randabschnitts 60 % bis 100 % der Gesamtlänge des Umfangs der jeweiligen Öffnung in der Symboldefinitionsschicht beträgt.

3. Direkt adressierbare Anzeige nach einem der vorhergehenden Ansprüche, wobei die Kohlenstoffschicht für jedes der Segmente in der Blickrichtung der Anzeige hinter der EC-Schicht angeordnet ist und die Kohlenstoffschicht für jedes der Segmente 25 % bis 100 % der EC-Schicht bedeckt und die Kohlenstoffschicht gegebenenfalls teilweise oder vollständig den unbedeckten Randabschnitt der Öffnung in der Symboldefinitionsschicht bedeckt und dadurch in direktem physischen Kontakt mit der Elektrolytschicht steht.

4. Direkt adressierbare Anzeige nach einem der vorhergehenden Ansprüche, wobei die Kohlenstoffschicht für jedes der Segmente mindestens 25 % oder mindestens 50 % oder mindestens 75 % oder mindestens 90 % oder mindestens 95 % oder 100 % der Symboldefinitionsschicht bedeckt oder alternativ die Kohlenstoffschicht für jedes der Segmente höchstens 25 % oder höchstens 50 % oder höchstens 75 % oder höchstens 90 % der Symboldefinitionsschicht bedeckt.

5. Direkt adressierbare Anzeige nach einem der vorhergehenden Ansprüche, ferner umfassend:
- mindestens eine Adressierungselektrode (173), welche in elektronischem Kontakt mit der ersten Elektrodenschicht angeordnet ist, und
- eine Gruppe von zweiten Adressierungselektroden (172), wobei jede der zweiten Adressierungselektroden in elektronischem Kontakt mit einer entsprechenden der Kohlenstoffschichten angeordnet ist, und
wobei jede der ersten und der zweiten Adressierungselektroden mit einer Adressierungsvorrichtung (64) verbindbar ist, welche so konfiguriert ist, dass sie eine variable Potentialdifferenz zwischen der (den) zweiten Adressierungselektrode(n) des mindestens einen umschaltbaren Segments und der mindestens einen ersten Adressierungselektrode bereitstellt, um die Farbe der ersten Elektrodenschicht umzuschalten.

6. Direkt adressierbare Anzeige nach einem der vorhergehenden Ansprüche, wobei die die direkt adressierbare Anzeige mindestens zwei umschaltbare Segmente oder mindestens sieben umschaltbare Segmente umfasst und wobei die Elektrolytschicht eines umschaltbaren Segments von der (den) anderen Elektrolytschicht(en) des (der) anderen umschaltbaren Segments (Segmente) ionisch isoliert ist.

7. Direkt adressierbare Anzeige nach einem der vorhergehenden Ansprüche, wobei für jedes Segment und für jede der mindestens einen Öffnung in der Symboldefinitionsschicht die EC-Schicht und die Öffnung eine entsprechende Mittelachse aufweisen und eine Mittelachse der EC-Schicht, die hinter der Symboldefinitionsschicht angeordnet ist, im Wesentlichen oder vollständig mit einer Mittelachse der Öffnung in der Symboldefinitionsschicht übereinstimmt.

8. Direkt adressierbare Anzeige nach einem der vorhergehenden Ansprüche, wobei die Breite des unbedeckten Randabschnitts im Bereich von 10 µm bis 900 µm liegt, vorzugsweise im Bereich von 50 µm bis 500 µm.

9. Direkt adressierbare Anzeige nach einem der vorhergehenden Ansprüche, wobei die Farbe der Elektrolytschicht und die Farbe der Symboldefinitionsschicht im Wesentlichen die gleichen sind.

10. Direkt adressierbare Anzeige nach einem der vorhergehenden Ansprüche, welche ferner mindestens ein Substrat umfasst, auf welchem das mindestens eine umschaltbare Segment angeordnet ist, wobei das Substrat vorzugsweise flexibel ist.

11. Direkt adressierbare Anzeige nach einem der vorhergehenden Ansprüche, wobei das umschaltbare Segment frei von jeglichem elektronischem Leiter zusätzlich zu der ersten Elektrodenschicht ist, der vor der mindestens einen Öffnung in der Symboldefinitionsschicht und vor der ersten Elektrodenschicht angeordnet ist, betrachtet in der Blickrichtung der direkt adressierbaren Anzeige.

12. Verfahren zur Herstellung einer direkt adressierbaren Anzeige, umfassend mindestens ein umschaltbares Segment, welches wiederholt zwischen einem Ein-Zustand und einem Aus-Zustand umschaltbar ist, wobei jedes des mindestens einen umschaltbaren Segments so konfiguriert ist, dass es in dem Ein-Zustand mindestens ein vorbestimmtes Symbol anzeigt, wobei das Verfahren umfasst:
- Bereitstellen einer kontinuierlichen oder diskontinuierlichen ersten Elektrodenschicht (110), umfassend elektrochromes und elektrochemisch aktives organisches Polymermaterial, welches elektrochemisch zwischen zwei verschiedenen visuell erfassbaren Färbungszuständen umschaltbar ist;
- vollständiges oder teilweises Bedecken der ersten Elektrodenschicht durch eine Symboldefinitionsschicht (120), wobei die Symboldefinitionsschicht elektronisch und ionisch isolierend ist und für jedes des mindestens einen Segments mindestens eine Öffnung (121) umfasst, wobei die mindestens eine Öffnung die Form des mindestens einen vorbestimmten Symbols eines jeweiligen des mindestens einen umschaltbaren Segments definiert und wobei jede der mindestens einen Öffnung eine jeweiligen Flächenabschnitt der ersten Elektrodenschicht frei legt,
- Bereitstellen einer Elektrolytschicht (130), welche mindestens einen Elektrolytschichtabschnitt (131) umfasst, wobei jeder der Elektrolytschichtabschnitte räumlich von den anderen getrennt ist und jeder der Elektrolytschichtabschnitte eine jeweilige der Öffnungen (121) in der Symboldefinitionsschicht vollständig bedeckt,
- Bereitstellen einer EC-Schicht (160), welche mindestens einen EC-Schicht-Abschnitt (161) umfasst, wobei jeder der EC-Schicht-Abschnitte räumlich von den anderen getrennt ist und jeder der EC-Schicht-Abschnitte mit einem jeweiligen der Elektrolytschichtabschnitte in direktem Kontakt steht und eine jeweilige der mindestens einen Öffnung (121) teilweise bedeckt, während ein Randabschnitt (20) der mindestens einen Öffnung unbedeckt bleibt;
- Bereitstellen einer Kohlenstoffschicht (140), welche mindestens einen Kohlenstoffschichtabschnitt (141) umfasst, wobei jeder der Kohlenstoffschichtabschnitte räumlich von den anderen getrennt ist und jeder der Kohlenstoffschichtabschnitte mit einem jeweiligen der EC-Schicht-Abschnitte (161) in elektronischem Kontakt steht und wobei sich die Kohlenstoffschicht (140) von der EC-Schicht über den Randabschnitt bis zu der Symboldefinitionsschicht erstreckt.

13. Verfahren zur Herstellung einer direkt adressierbaren Anzeige nach Anspruch 12, wobei jeder der Kohlenstoffschichtabschnitte 25 % bis 100 % des jeweiligen EC-Schicht-Abschnitts bedeckt, wobei für jedes umschaltbare Segment der Schritt des Bereitstellens der EC-Schicht Bereitstellen des EC-Schicht-Abschnitts derart umfasst, dass seine Abdeckung vorzugsweise innerhalb der jeweiligen Öffnung in der Symboldefinitionsschicht eingegrenzt ist, und wobei gegebenenfalls jeder der Kohlenstoffschichtabschnitte den unbedeckten Randabschnitt (20) einer jeweiligen Öffnung (121) in der Symboldefinitionsschicht teilweise oder vollständig bedeckt und dadurch in direktem physischen Kontakt mit jedem der Elektrolytschichtabschnitte (131) steht.

14. Verfahren zur Herstellung einer direkt adressierbaren Anzeige nach einem der Ansprüche 12 bis 13, ferner umfassend die Schritte:
- Bereitstellen mindestens einer ersten Adressierungselektrode (151; 173) in elektronischem Kontakt mit der ersten Elektrodenschicht;
- Bereitstellen zumindest einer Gruppe zweiter Adressierungselektroden (172), wobei jede zweite Adressierungselektrode in der Gruppe zweiter Adressierungselektroden mit einem jeweiligen des mindestens einen Kohlenstoffschichtabschnitts (141) in elektronischem Kontakt steht.

15. Verfahren zur Herstellung einer direkt adressierbaren Anzeige nach einem der Ansprüche 12 bis 14, wobei der Schritt des Bereitstellens einer EC-Schicht Zurücklassen eines Randabschnitts mit einer Breite von mindestens 10 µm oder mindestens 30 µm oder mindestens 50 µm oder mindestens 70 µm oder mindestens 85 µm oder mindestens 95 µm umfasst,
zusätzlich oder alternativ
der Schritt des Bereitstellens einer EC-Schicht Zurücklassen eines Randabschnitts mit einer Breite von höchstens 900 µm oder höchstens 500 µm oder höchstens 300 µm oder höchstens 200 µm oder höchstens 150 µm umfasst.

## Revendications

1. Affichage directement adressable (100), comprenant au moins un segment commutable qui est commutable de manière répétée entre un état de marche et un état d'arrêt, dans lequel chacun de ces au moins un segment commutable est configuré pour afficher au moins un symbole prédéterminé dans ledit état de marche, en outre chaque segment commutable comprend un empilement de couches, ledit empilement de couches comprenant :
- une première couche d'électrode (110) comprenant un matériau polymère organique électrochrome et électrochimiquement actif pouvant être commuté de manière électrochimique entre deux états de coloration différents visuellement détectables correspondant respectivement audit état de marche et audit état d'arrêt dudit segment commutable ;
- une couche définissant un symbole (120) qui est isolante sur le plan électronique et ionique et comprend au moins une ouverture (121), laquelle au moins une ouverture définit la forme dudit au moins un symbole prédéterminé, ladite couche définissant un symbole étant disposée derrière ladite première couche d'électrodes dans la direction de visualisation dudit affichage,
- une couche d'électrolyte (130) disposée derrière ladite première couche définissant un symbole dans la direction de visualisation dudit écran, laquelle couche d'électrolyte remplit et couvre l'au moins une ouverture de ladite couche définissant un symbole, une contre-électrode qui, dans la direction de visualisation dudit affichage, est disposée derrière ladite couche d'électrolyte, laquelle contre-électrode comprend une couche de carbone (140) et **caractérisée en ce que** la contre-électrode comprend en outre une couche d'EC (160),
dans lequel ladite couche d'EC comprend un matériau polymère organique électrochrome et électrochimiquement actif, et est disposée en contact ionique avec ladite couche d'électrolyte, et dans lequel ladite couche de carbone est disposée en contact physique avec ladite couche d'EC et de préférence disposée derrière ladite couche d'EC dans la direction de visualisation dudit affichage,
dans lequel, pour chacune desdites au moins une ouverture dans la couche définissant un symbole, l'extension spatiale de la couche d'EC est plus petite que l'extension spatiale de l'ouverture dans la couche définissant un symbole, laissant une partie de bord (20) de l'ouverture dans la couche définissant un symbole non couverte par la couche d'EC, laquelle partie de bord non couverte entoure partiellement ou entièrement ladite couche d'EC et dans lequel ladite couche de carbone s'étend derrière la couche d'électrolyte, de préférence au moins à partir de la couche d'EC à travers la partie de bord jusqu'à la couche définissant un symbole.

2. Affichage directement adressable selon la revendication 1, dans lequel, pour chacun desdits segments, la partie non couverte du bord est continue ou discontinue et entoure partiellement la couche d'EC, en plus ou en alternative la longueur totale de chaque portion de bord non couverte est comprise entre 60 % et 100 % de la longueur de la circonférence de l'ouverture respective dans la couche définissant un symbole.

3. Affichage directement adressable selon l'une quelconque des revendications précédentes, dans lequel, pour chacun desdits segments, la couche de carbone est disposée derrière la couche d'EC dans la direction de visualisation de l'affichage, et pour chacun desdits segments, la couche de carbone couvre entre 25 % et 100 % de la couche d'EC, et, éventuellement, la couche de carbone recouvre partiellement ou totalement ladite partie de bord non couverte de l'ouverture dans la couche définissant un symbole et est ainsi en contact physique direct avec ladite couche d'électrolyte.

4. Affichage à adressage direct selon l'une quelconque des revendications précédentes, dans lequel, pour chacun desdits segments, la couche de carbone couvre au moins 25 %, ou au moins 50 %, ou au moins 75 %, ou au moins 90 %, ou au moins 95 %, ou 100 % de la couche définissant le symbole,
alternativement, pour chacun desdits segments, la couche de carbone couvre au maximum 25 %, ou au maximum 50 %, ou au maximum 75 %, ou au maximum 90 % de la couche définissant un symbole.

5. Affichage directement adressable selon l'une quelconque des revendications précédentes, comprenant en outre :
- au moins une première électrode d'adressage (173) disposée en contact électronique avec ladite première couche d'électrode, et
- un ensemble de deuxièmes électrodes d'adressage (172), dans lequel chacune desdites deuxièmes électrodes d'adressage est disposée en contact électronique avec l'une desdites couches de carbone, et
dans lequel chacune desdites première et deuxième électrodes d'adressage peut être connectée à un dispositif d'adressage (64) configuré pour fournir une différence de potentiel variable entre la ou les deuxième(s) électrode(s) d'adressage dudit au moins un segment commutable et ladite au moins une première électrode d'adressage afin de commuter la couleur de ladite première couche d'électrodes.

6. Affichage directement adressable selon l'une quelconque des revendications précédentes, dans lequel ledit affichage directement adressable comprend au moins deux segments commutables ou au moins sept segments commutables, et
dans lequel la couche d'électrolyte d'un segment commutable est isolée de manière ionique de la ou des autres couches d'électrolyte de l'autre ou des autres segments commutables.

7. Affichage directement adressable selon l'une quelconque des revendications précédentes, dans lequel, pour chaque segment et pour chacune de ladite au moins une ouverture dans la couche définissant un symbole, la couche d'EC et l'ouverture ont un axe central respectif et un axe central de ladite couche d'EC disposée derrière ladite couche définissant un symbole coïncide sensiblement ou entièrement avec un axe central de ladite ouverture dans la couche définissant un symbole.

8. Affichage directement adressable selon l'une quelconque des revendications précédentes, dans lequel la largeur de ladite partie de bord non couverte est comprise dans une plage allant de 10 à 900 µm, de préférence dans une plage allant de 50 à 500 µm.

9. Affichage directement adressable selon l'une quelconque des revendications précédentes, dans lequel la couleur de la couche d'électrolyte et la couleur de la couche définissant un symbole sont sensiblement les mêmes.

10. Affichage directement adressable selon l'une quelconque des revendications précédentes, comprenant en outre un substrat sur lequel est disposé ledit au moins un segment commutable, dans lequel ledit substrat est de préférence flexible.

11. Affichage directement adressable selon l'une quelconque des revendications précédentes, dans lequel ledit segment commutable est exempt de tout conducteur électronique en plus de la première couche d'électrodes disposée devant ladite au moins une ouverture dans la couche définissant un symbole et devant ladite première couche d'électrodes vue dans la direction de visualisation dudit affichage directement adressable.

12. Procédé de fabrication d'un affichage directement adressable comprenant au moins un segment commutable qui est commutable de manière répétée entre un état de marche et un état d'arrêt, dans lequel chacun desdits au moins un segment commutable est configuré pour afficher au moins un symbole prédéterminé dans ledit état de marche, ledit procédé comprenant :
- fournir une première couche d'électrode continue ou discontinue (110) comprenant un matériau polymère organique électrochrome et électrochimiquement actif pouvant être commuté de manière électrochimique entre deux états de coloration différents détectables visuellement ;
- recouvrir entièrement ou partiellement ladite première couche d'électrode au moyen d'une couche définissant un symbole (120), laquelle couche définissant un symbole est isolante sur le plan électronique et ionique et comprend au moins une ouverture (121) pour chacun desdits au moins un segment, laquelle au moins une ouverture définit la forme de l'au moins un symbole prédéterminé de l'un respectif desdits au moins un segment commutable, et dans lequel chacune desdites au moins une ouverture expose une partie de surface respective de ladite première couche d'électrode,
- fournir une couche d'électrolyte (130) qui comprend au moins une portion de couche d'électrolyte (131), dans lequel chacune desdites portions de couche d'électrolyte sont séparées spatialement les unes des autres et chacune desdites portions de couche d'électrolyte couvre entièrement une respective de ladite ou desdites ouvertures (121) dans la couche définissant un symbole,
- fournir une couche d'EC (160) qui comprend au moins une portion de couche d'EC (161), dans lequel chacune desdites portions de couche d'EC est séparée spatialement les unes des autres et chacune desdites portions de couche d'EC sont en contact direct avec une desdites portions respectives de couche d'électrolyte et couvre partiellement une desdites au moins une ouverture (121) tout en laissant une portion de bord (20) de ladite au moins une ouverture à découvert ;
- fournir une couche de carbone (140) qui comprend au moins une portion de couche de carbone (141), dans lequel chacune desdites portions de couche de carbone est séparée spatialement les unes des autres, et chacune desdites portions de couche de carbone est en contact électronique avec une desdites portions respectives de couche d'électrolyte (161), et dans lequel ladite couche de carbone (140) s'étend de la couche d'EC à travers la portion de bord jusqu'à la couche définissant un symbole.

13. Procédé de fabrication d'un affichage directement adressable selon la revendication 12, dans lequel chacune desdites portions de couche de carbone couvre entre 25 % et 100 % de la portion de couche d'EC respective, dans lequel, pour chaque segment commutable, ladite étape consistant à fournir la couche d'EC comprend la fourniture de la portion de couche d'EC de telle sorte que sa couverture est de préférence confinée à l'intérieur de l'ouverture respective dans la couche définissant un symbole, et dans lequel, éventuellement, chacune desdites portions de couche de carbone couvre partiellement ou entièrement ladite portion de bord non couverte (20) d'une ouverture respective (121) dans la couche définissant un symbole et est ainsi en contact physique direct avec chacune desdites portions de couche d'électrolyte (131).

14. Procédé de fabrication d'un affichage directement adressable selon l'une quelconque des revendications 12 à 13, comprenant en outre les étapes consistant à :
- fournir au moins une première électrode d'adressage (151 ; 173), en contact électronique avec ladite première couche d'électrode ;
- fournir au moins un ensemble de secondes électrodes d'adressage (172),
dans lequel chaque seconde électrode d'adressage dans ledit ensemble de secondes électrodes d'adressage est en contact électronique avec une partie respective de ladite au moins une portion de couche de carbone (141).

15. Procédé de fabrication d'un affichage directement adressable selon l'une quelconque des revendications 12 à 14, dans lequel ladite étape consistant à fournir une couche d'EC comprend le fait de laisser une partie de bord ayant une largeur d'au moins 10 µm, ou d'au moins 30 µm, ou d'au moins 50 µm, ou d'au moins 70 µm, ou d'au moins 85 µm, ou d'au moins 95 µm, en outre ou alternativement, ladite étape consistant à fournir une couche d'EC comprend le fait de laisser une partie de bord ayant une largeur d'au plus 900 µm, ou d'au plus 500 µm, ou d'au plus 300 µm, ou d'au plus 200 µm, ou d'au plus 150 µm.
